# EUROPÄISCHE PATENTANMELDUNG

(11) **EP 1 952 688 A1**
(43) Veröffentlichungstag der Anmeldung: **06.08.2008**
(21) Anmeldenummer: 07001380.0
(22) Anmeldetag: 23.01.2007
(51) Int. Cl.: A01N 25/28, A01N 47/36, A01N 47/38, A01N 57/20

(54) **Ölsuspensionskonzentrat mit mikrogekaspelten und mit nicht mikrogekaspelten agrochemischen Wirkstoffen**

(71) Anmelder: Bayer CropScience GmbH, 65929 Frankfurt/Main (DE)
(72) Erfinder: Grohs, Ralph, 40219 Düsseldorf (DE); Deckwer, Roland, 65929 Frankfurt am Main (DE); Rosenfeldt, Frank, 40764 Langenfeld (DE)

(57) **Zusammenfassung**

Die vorüegende Erfindung betrifft somit ein Olsuspensionskonzentrat, enthaltend
(a) ein oder mehrere agrochemische Wirkstoffe in der Wasser-Phase in verkapselter Form in der Öl-Phase vorliegend, und
(b) ein oder mehrere agrochemische Wirkstoffe in der Öl-Phase, optional verkapselt,
sowie übliche Hilfs- und Zusatzstoffe.

## Beschreibung

Ölsuspensionskonzentrat mit mikrogekapselten und mit nicht mikrogekapselten agrochemischen Wirkstoffen

Allgemein betrifft die Erfindung Ölsuspensionskonzentrate für den Pflanzenschutz und darin enthaltene agrochemische Wirkstoffe, die sowohl in gekapselter als auch in nicht gekapselter Form vorliegen können.

Mikrokapseln zeichnen sich dadurch aus, dass die Kapselhülle eine Wand aus Polymeren ist, welche die beiden Flüssigkeitsphasen außerhalb und innerhalb der Kapsel physikalisch trennt. Der Begriff "Mikrokapsel" ist daher von anderen Formulierungsformen wie z.B, Emulsion, Mikrokugel, Liposom zu unterscheiden, da diese das Merkmal der physikalischen Trennung von Flüssigkelten durch eine aus Polymeren bestehende Wand nicht aufweisen.

Man unterscheidet die "Öl-in-Wasser Mikroverkapselung" und die "Wasser-in-Öl Mikroverkapselung".

Bei der Öl-in-Wasser Mikroverkapselung liegt eine Emulsion von Öl-in-Wasser vor, d.h. das nicht mit Wasser mischbare oder nicht wasserlösliche Material ist vom Polymermaterial der Mikrokapsel umgeben. Dagegen ist bei der Wasser-in-Öl Mikroverkapselung die wässrige Phase im Inneren der Mikrokapsel. Sie wird daher auch als "Inverse-Mikroverkapselung" bezeichnet.

Die vorliegende Erfindung nutzt vorwiegend die Wasser-in-Öl Mikroverkapselung, es sei denn das Verfahren der Multi-Mikroverkapselung wird eingesetzt. Bei der Multi-Mikroverkapselung ist zwischen der "Wasser-in-Öl-in-Wasser-Mikroverkapselung" und der "Wasser-in-Öl-in-Öl-Mikroverkapselung" zu unterscheiden. Im Rahmen der Erfindung Ist prinzipiell die Umsetzung beider Techniken möglich, wobei die Wasser-in-Öl-in-Öl-Mikroverkapselung im Vordergrund steht.

Für die genannten Formen der Mikroverkapselung sind entsprechende Herstellungsverfahren bekannt. Diese werden in unterschiedlichen Bereichen, z.B. Lebensmittelproduktion, Pharmazie, Farbstoffchemie, Agrochemie usw. eingesetzt.

Bei der Öl-in-Wasser Mikroverkapselung erfolgt die Bildung der Mikrokapseln ausgehend von einer Öl-in-Wasser-Emulsion aus den in den Öl-Tröpfchen enthalten Monomeren und Vorpolymeren unter dem Einfluss von Wärme und/oder durch pH-Änderung und/oder durch mechanisches Rühren. Die jeweilige Behandlung verursacht die Polymerisierung der Monomer bzw. der Vorpolymere. Verfahren dieser Art sind z.B. in den Patenten US 4,285,720 und US 4,956,129 offenbart.

Die EP 1 282 353 A1 offenbart die Kombination von Pflanzenschutzmitteln mit organischen oder anorganischen Trägermateriallen zur kontrollierten Freisetzung der Wirkstoffe, wobei auch die Verwendung der Öl-in-Wasser Mikroverkapselung vorgesehen ist. Die offenbarten Kombinationen gestatten die Unterdrückung der Antagonisierung anderer Wirkstoffe in Mischungen mit diesen und machen gleichzeitig die Anwendung von zeit- und arbeitsintensiven Splittapplikationen überflüssig. Das Problem der chemischen Inkompatibilität zwischen Wirkstoffen ist nicht Gegenstand der EP 1 282 353 A1.

Wasser-in-Öl Mikrokapseln werden ausgehend von einer Wasser-in-Öl Emulsion durch das "Wasser-in-Öl Verfahren" hergestellt. Ein solches Verfahren ist lm US Patent US 4,157,983 offenbart. Ein entsprechendes Verfahren unter Verwendung von zwei Monomeren und Vorpolymeren ist in dem Patent US 4,534,783 offenbart.

Ein Verfahren zur mehrfachen Mikroverkapselung, das so genannte kontinuierliche Multi-Mikroverkapselungsverfahren, wird in der WO 2005/058476 A1 offenbart. Dabei handelt es sich um ein kontinuierliches Verfahren zur Mikroverkapselung Wasser-in-Öl-in-Wasser durch in situ-Grenzflächenpolymerisation der entsprechenden Emulsion. Die In den Mikrokapseln eingeschlossenen aktiven Verbindungen sind gesundheitsfördernd und für andere biologische Zwecke geeignet. Der Einsatz des Verfahrens zur Formulierung von agrochemischen Wirkstoffen bzw. zur Lösung des Problems der chemischen Inkompatibiliät zwischen agrochemischen Wirkstoffen ist dabei nicht vorgesehen.

Ein weiteres besonderes Verfahren zur "Wasser-in-Öl Mikroverkapselung" ist in WO 98/28957 A offenbart. Dabei wird die Wand der Mikrokapseln in Gegenwart eines aktiven Oberflächen-Protonen-Transfer Protonen-Katalysators durch in situ-Selbstkondensation der Vorpolymere, die sich an der Grenzfläche zwischen wässriger und organischer Phase in der wässrigen Phase befinden, durch Wärmezuführung gebildet. In der wässrigen Phase im Inneren der Mikrokapseln befindet sich die aktive Substanz, die nach der Lehre der WO 98/28957 A auch aus einem Pestizide bestehen kann. Außerdem ist, dass auch die organische Phase als ein bioaktives Material ein Pestizid enthalten kann. Als Pestizide der wässrigen Phase sind in der WO 98/28957 A genannt Paraquat, Diquat, Glyphosate, Dicamba, Acifluorfen, Fomesafen, loxynil, Bromoxynil, Bentazon, Atrazine und Azoxystrobin genannt. Als öllösliche Herbizide sind EPTC, Butylate, Cycloate, Molinate, Vernolate, Acetochlor, Metolachlor, Alachlor, Butachlor, Propachlor und Trifluralin genannt. Als Insektizide werden Parathion, Malathion, lonofos, Permethin, Lambda-cyhalothrin, Deltamehtrin, Trlomethrin, Cypermethrin und Tefluthrin genannt, sowie als Fungizid Azoxystrobin. Optional können aus Safener eingesetzt werden. Das Problem der chemischen Inkompatibiliät zwischen zwei oder mehreren agrochemischen Wirkstoffen ist in der WO 98/28957 A nicht angesprochen.

Der Kongressbeitrag "Reverse Phase Microcapsule Suspension of Glyphosate Isopropylamine Salt in Hydrocarbon Fluids in Combination with Herbicidal Partners" aus dem Jahr 2002 (10th IUPAC International Congress on the Chemistry of Crop Protection Basel 2002, präsentiert von P.Y. Guyomar, Exxon Mobil Chemical, Book of Abstracts Topics 1-4, Vol. 1, 4c.19) offenbart den Einsatz des wassergelösten Herbizides Glyphosat in mikrogekapselter Form (Glyphosate Capsule Suspension (CS) In oil fluids) in Kombination mit dem neben den Mikrokapseln in der Ölphase vorliegenden öllöslichen Herbizid Lactofen. Nachgewiesen wurde die Lagerbarkeit der Glyphosate-Lactofen-Formulierung über drei Monate und, dass im Spritztank keine der Co-Herbizid-Inkompatibilität zwischen den konkret genannten Herbiziden auftrat.

Der genannte Kongressbeitrag spricht allgemein die Inkompatibilität zweier Herbizide an. Mit Lactofen wird für die Ölphase ein Co-Herbizid vorgeschlagen, das sich durch eine geringe Wasserlöslichkeit, d.h. durch eine hohe Löslichkeit in Öl und zugleich eine geringe Hydrolyseempfindlichkeit auszeichnet. Eine differenziertere Betrachtung bzw. Lösungsansätze für das vielschichtige Problem der chemischen Inkompatibilität, insbesondere beim Einsatz hydrolyseempfindlicher Co-Herbizide wird daher in dem Kongressbeitrag nicht offenbart.

Grundsätzlich gilt, dass bei der Formulierung von Wirkstoffen aus der Klasse der Sulfonylharnstoffe stets auch deren Hydrolysempfindlichkeit zu berücksichtigen ist. Sehr gut sichergestellt ist deren chemische Stabilität durch die bislang etablierten Forumullerungstechniken, sofern die Sulfonylharnstoffe als Einzelwirkstoff oder in Kombination mit anderen Sulfonylharnstoffen oder auch mit Safener eingesetzt werden. Eine Herausforderung bleibt jedoch die Formulierung von Sulfonlyhamstoffen In Kombination mit Wirk- oder Hilfstoffen, deren Struktur eine Säurefunktion und/oder freie OH-Gruppen aufweisen. Wirkstoffe die für ihr hydrolyseinduzierendes Potential gegenüber Sulfonylhamstoffen bekannt sind, sind z.B. Glufosinate und Glyphosate. Der niedrige pH von Glyphosate (< 7) ist für solche Sulfonylharnstoffe, die im basischen Bereich stabil sind, schädlich.

Die chemischen Inkompatibiltät von Wirkstoffen ist ein vielschichtiges Problem. Neben der Gebindestabilität bzw. Lagerstabilität kann die Stabilität des Wirkstoffs nach der Verdünnung des Konzentrats im Spritztank ein Problem sein. Bis zur Ausbringung des Wirkstoffs durch Versprühen muss das Auskristallisieren verhindert werden und die Verteilbarkeit sowie die biologische Aktivität des Wirkstoffs gewährleistet sein.

Die Aufgabe der vorliegenden Erfindung bestand darin, eine verbesserte, flüssige Pflanzenschutzmittelformulierung mit mindestens zwei agrochemischen Wirkstoffen zur Verfügung zu stellen, wobei jeder Wirkstoff, insbesondere die in der Formulierung enthaltenen chemisch instabilen Wirkstoffe, sowie die Formulierung insgesamt, eine hohe chemische und physikalische Stabilität sowie eine hohe biologische Effektivität und Kulturpflanzenverträglichkeit aufweisen.

Hierzu gehört auch allgemein die Vermeidung von antagonistischer Minderwirkung oder Überdosierung welche die Anwendung von Splittapplikationen sonst erforderlich machen.

Überraschenderweise wurde nun gefunden, dass diese Aufgabe durch das spezielle Ölsuspensionskonzentrat der vorliegenden Erfindung gelöst wird.

Die vorliegende Erfindung betrifft somit ein Ölsuspensionskonzentrat, enthaltend
(a) ein oder mehrere agrochemische Wirkstoffe in der Wasser-Phase, in verkapselter Form in der Öl-Phase vorliegend, und
(b) ein oder mehrere agrochemische Wirkstoffe in der Öl-Phase, optional verkapselt,
sowie übliche Hilfs- und Zusatzstoffe.

Als besondere Ausführungsformen der Erfindung werden drei Alternativen vorgeschlagen.

Der Kerngedanke besteht bei den Alternativen darin, Im Falle der Kombination von Wirkstoffen den eher hydrolyseempfindlichen Wirkstoff zu schützen, indem ein anderer Wirkstoff, der möglicherweise ein hydrolyseinduzierendes Potential aufweist, in mikrogekapselter Form vorliegt.

Nach der ersten Alternative werden Ölsuspenslonskonzentrate vorgeschlagen, die mindestens zwei unterschiedliche agrochemische Wirkstoffe enthalten, von denen mindestens einer wasserlöslich ist und im Inneren einer Mikrokapsel vorliegt. Mindestens ein weiterer in der Ölphase dispergiert oder gelöst vorliegender Wirkstoff ist ebenfalls gekapselt.

D.h. bei dieser ersten Alternative sind mindestens zwei Wirkstoffe, die sich z.B. in Ihrer Löslichkeit und/oder in ihrer Hydrolyseempfindlichkeit unterscheiden, mikrogekapselt. Dadurch wird der hydrolyseempfindliche Wirkstoff zusätzlich geschützt, vor dem Wirkstoff, der aufgrund seines hydrolyseinduzierenden Potentials ebenfalls in mikrogekapselter Form vorliegt.

Die zusätzliche Mikroverkapselung der besser in der Ölphase dispergiert oder gelöst vorliegenden Wirkstoffe kann zudem den Vorteil haben, dass aufgrund der verzögerten Freisetzung der unterschiedlich verkapselten Wirkstoffe Splittapplikationen vermieden werden können.

In der zweiten Alternative wird ein Ölsuspensionskonzentrat eingesetzt, das mindestens zwei unterschiedliche agrochemische Wirkstoffe enthält, von denen mindestens einer im Inneren einer Mikrokapsel vorliegt und mindestens einer in nicht gekapselter Form in der Ölphase vorliegt, wobei der in nicht gekapselter Form in der Ölphase vorliegende Wirkstoff ein Acetolactatsynthase(ALS)-Hemmer ist. D.h. gemäß dem Ansatz der zweiten Alternative wird auf die zusätzliche Mikroverkapselung der in der Ölphase dispergiert oder gelöst vorliegende Wirkstoffe verzichtet.

In der dritten Alternative wird ein Ölsuspensionskonzentrat eingesetzt, das mindestens zwei unterschiedliche agrochemische Wirkstoffe enthält, von denen mindestens einer im Inneren einer Mikrokapsel vorliegt und mindestens einer in nicht gekapselter Form in der Ölphase vorliegt, wobei der mikroverkapselter Wirkstoff ein Acetolactatsynthase(ALS)-Hemmer ist und der Wirkstoff mit hohem hydrolysinduzierendem Potential in nicht gekapselter Form in der Ölphase vorliegt. D.h. gemäß dem Ansatz der dritten Alternative wird auf die zusätzliche Mikroverkapselung der hydrolyseinduzierenden Wirkstoffe verzichtet.

Nach einem zusätzlichen unabhängigen Lösungsansatz ist vorgesehen, dass die Wirkstoffe gemäß dem Multi-Mikroverkapselungsverfahren in WO 2005/058476 A1 behandelt wurden und in entsprechender Form vorliegen. Zum Schutz des bzw. der hydrolyseempfindlichen Wirkstoffe liegen im Fall der Wasser-in-Öl-in-Öl-Mikroverkapselung die hydrolyseinduzierenden Wirkstoffe im Inneren des Kapselkerns vor. Der hydrolyseempfindlichste Wirkstoff liegt dagegen in der Ölphase des Ölsuspensionskonzentrates vor, weil der dort am besten geschützt ist.

Die Verbindungsklasse der Sulfonylharnstoffe gehört ihrem Wirkmechanismus nach zur Gruppe der ALS-Hemmer. Diese hemmen das Enzym Acetolactatsynthase (ALS) und damit die Proteinsynthese In den Pflanzen.

Nachfolgend werden die zur Beschreibung der Erfindung verwendeten Definitionen näher erläutert.

Unter dem Begriff Ölsuspensionskonzentrat (OD, Öldispersion) wird ein Suspensionskonzentrat auf Basis organischer mit Wasser nicht mischbarer Lösungsmittel verstanden. Dabei sind ein oder mehrere Wirkstoffe oder Safener in dem organischen Lösungsmittel suspendiert. Dabei können weitere Wirkstoffe oder Safener in dem organischen Lösungsmittel gelöst sein.

Der Begriff agrochemische Wirkstoff im Sinne dieser Erfindung umfasst Herbizide, Pflanzenwuchsregulatoren, Safener. D.h. die erfindungsgemäßen Ölsuspenslonskonzentrate können auch einen oder mehrere Safener enthalten, wobei neben dem Wirkstoff auch der Safener in mikrogekapselter Form vorliegen kann. Mögliche Safener sind im Zusammenhang mit den agrochemischen Wirkstoffen nachfolgend beispielhaft genannt. Weiterhin können die erfindungsgemäßen Ölsuspensionskonzentrate eines oder mehrere anorganische Salze sowie übliche Hilfs- und Zusatzstoffe enthalten.

Beispiele für einzelne agrochemische Wirkstoffe sind:

### Herbizide

Beispiele für Herbizide sind z.B. ALS-Inhibitoren (Acetolactat-Synthetase-Inhibitoren) oder Herbizide aus der Gruppe der Carbamate, Thiocarbamate, Halogenacetanilide, substituierte Phenoxy-, Naphthoxy- und Phenoxyphenoxycarbonsäure-Derivate sowie Heteroaryloxy-phenoxyalkancarbonsäure-Derivate, wie Chinolyloxy-, Chinoxalyl-oxy-, Pyridyloxy-, Benzoxazolyloxy- und Benzthiazolyloxyphenoxyalkancarbonsäureester, Cyclo-hexandionabkömmlinge, Imidazolinone, Phosphor-haltige Herbizide, z.B. vom Glufosinate-Typ oder vom Glyphosate-Typ, Pyrimidinyloxy-pyridincarbonsäure-Derivate, Pyrimidyloxy-benzoesäure-Derivate, Triazolopyrimidin-sulfonamid-Derivate sowie S-(N-Aryl-N-alkylcarbamoylmethyl)-dithiophosphorsäureester, Harnstoffe sowie Hydroxybenzonitrile, Dabei sind im Falle der vorliegenden Erfindung die Herbizide aus der Gruppe der Carbamate, Thiocarbamate, Halogenacetanilide nicht als in der Ölphase vorliegende Wirkstoffe vorgesehen. In der wässrigen Phase im Inneren der Mikrokapseln, die im Ölsuspenslonskonzentrat enthalten sind, können dagegen Carbamate, Thiocarbamate, Halogenacetanilide vorliegen.

Bei den herbiziden Wirkstoffen aus der Gruppe der ALS-Inhibitoren, wie Sulfonylharnstoffe, sind im Sinne der vorliegenden Erfindung neben den neutralen Verbindungen stets auch deren Salze mit anorganischen und/oder organischen Gegenionen zu verstehen. So können z.B. Sulfonylharnstoffe z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃.
A) Bevorzugte ALS-Inhibitoren entstammen aus der Reihe der Sulfonylharnstoffe und/oder ihrer Salze, z.B. Pyrimidin- oder Trlazinylaminocarbonyl-[benzol-, pyridin-, pyrazol-, thiophen- und (alkylsulfonyl)-alkylamino-]-sulfamide,
Solche geeigneten Sulfonylharnstoffe sind beispielsweise
A1) Phenyl- und Benzylsulfonylharnstoffe und verwandte Verbindungen, z.B.
1-(2-Chlorphenylsulfonyl)-3-(4-methoxy-6-methyl-1,3,5-triazin-2-yl)-harnstoff (Chlorsulfuron),
1-(2-Ethoxycarbony)phenylsulfonyl)-3-(4-chlor-6-methoxypyrimidin-2-yl)-harnstoff (Chlorimuron-ethyl),
1-(2-Methoxypheny)sulfonyl)-3-(4-methoxy-6-methy)-1,3,5-triazin-2-yl)-harnstoff (Metsulfuron-methyl),
1-(2-Chlorethoxyphenylsulfonyl)-3-(4-methoxy-6-methyl-1,3,5-triazin-2-yl)-harnstoff (Triasulfuron),
1-(2-Methoxycarbonylphenylsulfonyl)-3-(4,6-dimethylpyrimidin-2-yl)-hamstoff (Sulfumeturon-methyl),
1-(2-Methoxycarbony)phenylsulfonyl)-3-(4-methoxy-6-methyl-1,3,5-triazin-2-yl)-3-methylhamstoff (Tribenuron-methyl),
1-(2-Methoxycarbonylbenzylsulfonyl)-3-(4,6-dimethoxypyrimidin-2-yl)-harnstoff (Bensulfuron-methyl),
1-(2-Methoxycarbonylphenylsulfonyl)-3-(4,6-bis-(difluormethoxy)pyrimidin-2-yl)-hamstoff, (Prirnisulfuron-methyl),
3-(4-Ethyl-6-methoxy-1,3,5-triazin-2-yl)-1-(2,3-dihydro-1,1-dioxo-2-methylbenzo-[b]thlophen-7-sulfonyl)-harnstoff (EP-A 0 079 683),
3-(4-Ethoxy-6-ethyl-1,3,5-triazin-2-yl)-1-(2,3-dihydro-1,1-dioxo-2-methylbenzo[b]-thlophen-7-sulfonyl)harnstoff (EP-A 0 079 683),
3-(4-Methoxy-6-methyl-1,3,5-triazin-2-yl)-1-(2-methoxycarbonyl-5-jod-phenylsulfonyl)-hamstoff (Iodosulfuron-methyl und dessen Natriumsalz, WO 92/13845), DPX-66037, Triflusulfuron-methyl (s. Brighton Crop Prot. Conf. - Weeds -1995, S. 853),
CGA-277476, (s. Brighton Crop Prot. Conf. - Weeds -1995, S. 79),
Methyl-2-[3-(4,6-dimethoxypyrimidin-2-yl)ureidosulfonyl]-4-methansulfon-amidomethyl-benxoat (Mesosulfuron-methyl, WO 95/10507),
N,N-Dimethyl-2-[3-(4,6-dimethoxypyrimidin-2-yl)ureidosulfonyl]-4-formylaminobenzamid (Foramsulfuron, WO 95/01344);
A2) Thienylsulfonylhamstoffe, z.B.
1-(2-Methoxycarbonylthlophen-3-yl)-3-(4-methoxy-6-methyl-1,3,5-triazin-2-yl)hamstoff (Thifensulfuron-methyl);
A3) Pyrazolylsulfonylharnstoffe, z.B.
1-(4-Ethoxycarbonyl-1-methylpyrazol-5-yl-sulfonyl)-3-(4,6-dimethoxypyrimidin-2-yl)harnstoff (Pyrazosulfuron-methyl);
Methyl-3-chlor-5-(4,6-dimethoxypyrimidin-2-ylcarbamoylsulfamoyl)-1-methyl-pyrazol-4-carboxylat (EP-A 0 282 613);
5-(4,6-Dimethylpyrimidin-2-yl-carbamoylsulfamoyl)-1-(2-pyridyl)-pyrazol-4-carbonsäuremethylester (NC-330, s. Brighton Crop Prot. Conference 'Weeds' 1991, Vol. 1, S. 45 ff.).
DPX-A8947, Azimsulfuron, (s. Brighton Crop Prot. Conf. 'Weeds' 1995, S. 65);
A4) Sulfondiamid-Derivate, z.B.
3-(4,6-Dimethoxypyrimidin-2-yl)-1-(N-methyl-N-methylsulfonylaminosulfonyl)-harnstoff (Amidosulfuron) und dessen Strukturanaloge (EP-A 0131 258 und Z. Pfl. Krankh. Pfl. Schutz, Sonderheft XII, 489-497 (1990));
A5) Pyridylsulfonylharnstoffe, z.B.
1-(3-N,N-Dimethylaminocarbonylpyridin-2-ylsulfonyl)-3-(4,6-dimethoxypyrimidin-2-yl)-harnstoff (Nicosulfuron),
1-(3-Ethylsulfonylpyridin-2-ylsulfonyl)-3-(-(4,6-dimethoxypyrimidin-2-yl)-harntoff (Rimsulfuron),
2-[3-(4,6-Dimethoxypyrimidin-2-yl)-ureidosulfonyl]-6-trifluomethyl-3-pyridincarbonsäuremethylester, Natriumsalz (DPX-KE 459, Flupyrsulfuron, s. Brighton Crop Prot. Conf. Weeds, 1995, S. 49),
Pyridyisulfonylhamstoffe, wie sie z.B. In DE-A 40 00 503 und DE-A 40 30 577 beschrieben sind, vorzugsweise solche der Formel 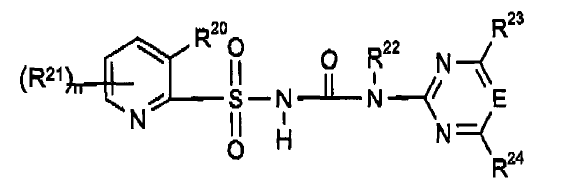 worin
- E: CH oder N, vorzugsweise CH,
- R²⁰: lod oder NR²⁵R²⁶,
- R²¹: Wasserstoff, Halogen, Cyano, (C₁-C₃)-Alkyl, (C₁-C₃)-Alkoxy, (C₁-C₃)-Halogenalkyl, (C₁-C₃)-Halogenalkoxy, (C₁-C₃)-Alkylthio, (C₁-C₃)-Alkoxy-(C₁-C₃)-alkyl, (C₁-C₃)-Alkoxy-carbonyl, Mono- oder Di-((C₁-C₃)-alkyl)-amino, (C₁-C₃)-Alkylsulfinyl oder -sulfonyl, SO₂-NR^{x}R^{y} oder CO-NR^{x}R^{y}, insbesondere Wasserstoff,
- R^{x}, R^{y}: unabhängig voneinander Wasserstoff, (C₁-C₃)-Alkyl, (C₁-C₃)-Alkenyl, (C₁-C₃)-Alkinyl oder zusammen -(CH₂)₄-, -(CH₂)₅- oder -(CH₂)₂-O-(CH₂)₂-,
- n: 0,1,2 oder 3, vorzugsweise 0 oder 1 ist,
- R²²: Wasserstoff oder CH₃,
- R²³: Halogen, (C₁-C₂)-Alkyl, (C₁-C₂)-Alkoxy, (C₁-C₂)-Halogenalkyl, insbesondere CF₃, (C₁-C₂)-Halogenalkoxy, vorzugsweise OCHF₂ oder OCH₂CF₃,
- R²⁴: (C₁-C₂)-Alkyl, (C₁-C₂)-Halogenalkoxy, vorzugsweise OCHF₂, oder (C₁-C₂)-Alkoxy,
- R²⁵: (C₁-C₄)-Alkyl,
- R²⁶: (C₁-C₄)-Alkylsulfonyl oder
- R²⁵ und R²⁶: gemeinsam eine Kette der Formel -(CH₂)₃SO₂- oder -(CH₂)₄SO₂-bedeuten, z.B. 3-(4,6-Dimethoxypyrimiden-2-yl)-1-(3-N-methylsulfonyl-N-methyl-aminopyridin-2-yl)-sulfonylharnstoff, oder deren Salze;
In einer bevorzugten Ausführungsform des erfindungsgemäßen Ölsuspensionskonzentrats liegt als Herbizider Wirkstoff Pyridyl-Sulfonylhamstoff in suspendierter Form in der organischen Phase vor. Dies bedeutet, daß der Hauptanteil (in Gew.-%) an Pyridyl-Sulfonylhamstoff ungelöst in fein verteilter Form vorliegt, ein geringerer Teil des Pyridyl-Sulfonylharnstoffes kann gelöst vorliegen. Vorzugsweise ist der Pyridyl-Sulfonylharnstoff im organischen Lösungsmittel zu mehr als 50 Gew.-%, besonders bevorzugt zu mehr als 80 Gew.-% suspendiert, jeweils bezogen auf die Gesamtmenge an Pyridyl-Sulfonylharnstoff a) in dem erfindungsgemäßen Ölsuspensionskonzentrat.
A6) Als Pyridyl-Suffonylharnstoffe bevorzugt sind Dioxazin-Pyridylsulfonylharnstoffe, insbesondere der allgemeinen Formel (I) 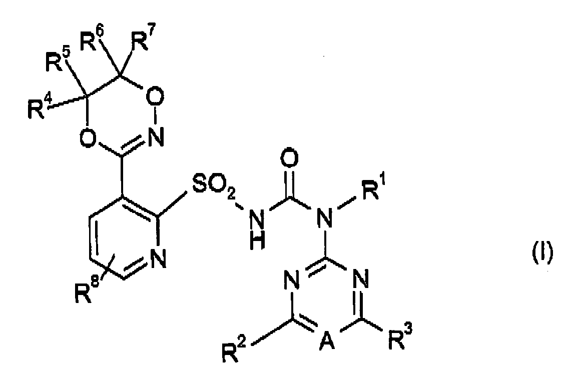 worin
- A: für Stickstoff oder eine CR¹¹-Gruppierung steht,
wobei
R¹¹ für Wasserstoff, Alkyl, Halogen und Haloalkyl steht,
- R¹: für Wasserstoff oder einen gegebenenfalls substituierten Rest aus der Reihe Alkyl, Alkoxy, Alkoxyalkyl, Alkenyl, Alkinyl, Cycloalkyl, Cycloalkylalkyl, Aralkyl und Aryl steht,
- R²: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
- R³: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
- R⁴ - R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen stehen,
- R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen steht,
wobei in den vorgenannten Resten die Alkyl- und Alkylengruppen jeweils 1 bis 6 C-Atome, die Alkenyl- und Alkinylgruppen jeweils 2 bis 6 C-Atome, die Cycloalkylgruppen jeweils 3 bis 6 C-Atome und die Arylgruppen jeweils 6 bzw. 10 C-Atome enthalten können.
Die Verbindungen der Formel (I) und deren Salze sind bekannt, ebenso wie deren Herstellung, z.B. aus US 5,476,936 die hiermit in die vorliegende Beschreibung aufgenommen wird.
Bevorzugt sind Verbindungen der Formel (I) und deren Salze,
worin
- A: für Stickstoff oder eine CH-Gruppierung steht,
- R¹: für Wasserstoff oder einen gegebenenfalls durch Halogen substituierten Rest aus der Reihe Alkyl, Alkoxy, Alkoxyalkyl, Alkenyl und Alkinyl mit jeweils bis zu 3 Kohlenstoffatomen steht,
- R²: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R³: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R⁴ - R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxy-carbonyl oder Alkylaminocarbonyl mit jeweils 1 bis 3 Kohlenstoffatomen in den Alkylresten steht,
- R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylamino-carbonyl mit jeweils 1 bis 3 Kohlenstoffatomen in den Alkylresten steht.
Weiter bevorzugt sind Salze, die man aus Verbindungen der Formel (I) und Basen, wie z.B. Natrium-, Kalium- oder Calciumhydroxid, -hydrid, -amid und -carbonat, Natrium- oder Kalium-C₁-C₄-alkanolaten, Ammoniak, C₁-C₄-Alkylaminen, Di-(C₁-C₄-alkyl)-aminen oder Tri-(C₁-C₄-alkyl)-aminen, nach üblichen Verfahren erhält.
Insbesondere bevorzugt sind Verbindungen der Formel (I) und deren Salzen,
worin
- A: für Stickstoff oder eine CH-Gruppierung steht,
- R¹: für Wasserstoff, Methyl, Ethyl, Methoxy, Methoxymethyl oder Ethoxy steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: unabhängig voneinander für Wasserstoff, Fluor, Chlor, Cyano, oder für jeweils gegebenenfalls durch Chlor oder Fluor substituiertes Methyl, Methylthio, Methylsulfinyl, Methylsulfonyl, Methoxycarbonyl und Ethoxycarbonyl steht, vorzugsweise für Wasserstoff,
- R⁸: für Wasserstoff, Fluor, Chlor, Brom, Cyano oder für jeweils gegebenenfalls durch Chlor oder Fluor substituiertes Methyl, Methoxy, Ethoxy, Methylthio, Ethylthio, Methylsulfinyl, Ethylsulfinyl, Methylsulfonyl, Ethylsulfonyl, Methyl- oder Dimethylamino steht, vorzugsweise für Wasserstoff.
Besonders bevorzugt sind Verbindungen der Formel (I) und deren Salze, insbesondere deren Alkalimetallsalze,
worin
- A: für Stickstoff steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: für Wasserstoff steht,
- R⁸: für Wasserstoff steht.
Ebenfalls besonders bevorzugt sind Verbindungen der Formel (I) und deren Salze, insbesondere deren Alkalimetallsalze,
worin
- A: für eine CH-Gruppierung steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: für Wasserstoff steht,
- R⁸: für Wasserstoff steht.
Die oben aufgeführten allgemeinen oder in Vorzugsbereichen aufgeführten Restedefinitionen können untereinander, also auch zwischen den angegebenen bevorzugten Bereichen beliebig kombiniert werden.
Die bei den Restedefinitionen genannten Kohlenwasserstoffreste, wie Alkyl, Alkenyl oder Alkinyl, auch in Kombinationen mit Heteroatomen, wie in Alkoxy, Alkylthio, Haloalkyl oder Alkylamino, sind auch dann, wenn dies nicht ausdrücklich angegeben ist, geradkettig oder verzweigt.
Die Pyridylsulfonylharnstoffe, z.B. solche der allgemeinen Formel (I), können auch als Salze vorliegen, z.B. als Metallsalze wie Alkali (z.B. Na, K) -Salze oder als Erdalkali (z.B. Ca, Mg) -Salze oder als Ammonium- oder organische Aminsalze. Man erhält solche Salze in einfacher Weise nach üblichen Salzbildungsmethoden, beispielsweise durch Lösen oder Dispergieren eines Pyridyisulfonylhamstoffs, z.B. der Formel (I), in einem geeigneten Verdünnungsmittel, wie z.B. Methylenchlorid, Aceton, tert.-Butyl-methylether oder Toluol, und Zugabe einer geeigneten Base. Die Salze können dann - gegebenenfalls nach längerem Rühren - durch Einengen oder Absaugen isoliert werden.
Erfindungsgemäß bevorzugt enthaltene herbizide Wirkstoffe a) sind in der nachfolgenden Tabelle 1 genannt, worin folgende Abkürzungen verwendet werden:
- Smp.:=: Schmelzpunkt
- ⁽⁺⁾ =: Der angegebene Schmelzpunkt (Smp.) bezieht sich jeweils auf das entsprechende Natriumsalz, d.h. die entsprechende Verbindung, worin der Wasserstoff der -SO₂-NH-Gruppe durch Natrium ersetzt ist.

**Tabelle 1: Beispiele für Verbindungen der Formel (I) mit R⁴=R⁵=R⁶=R⁷=R⁸=H:**

| Bsp.- Nr. | R¹ | A | R² | R³ | Smp. (°C) |
|---|---|---|---|---|---|
| I-1 | H | CH | OCH₃ | OC₂H₅ | 154 |
| I-2 | H | CH | OCH₃ | CH₃ | |
| I-3 | H | CH | OHC₃ | CH₃ | 180-181⁽⁺⁾ |
| I-4 | H | CH | OCH₃ | C₂H₅ | |
| I-5 | H | CH | OCH₃ | CF₃ | |
| I-6 | H | CH | OCH₃ | OCF₂H | |
| I-7 | H | CH | OCH₃ | NHCH₃ | |
| I-8 | H | CH | OCH₃ | N(CH₃)₂ | 199.5 |
| I-9 | H | CH | OCH₃ | Cl | 110-111 |
| I-10 | H | CH | OCH₃ | Cl | 175-178⁽⁺⁾ |
| I-11 | H | CH | OCH₃ | OCH₃ | 167-168 |
| I-12 | H | CH | OCH₃ | OCH₃ | 171-172⁽⁺⁾ |
| I-13 | H | CH | OC₂H₅ | OC₂H₅ | |
| I-14 | H | CH | OC₂H₅ | OC₂H₅ | 152-154⁽⁺⁾ |
| I-15 | H | CH | OC₂H₅ | CH₃ | |
| I-16 | H | CH | OC₂H₅ | C₂H₅ | |
| I-17 | H | CH | OC₂H₅ | CF₃ | |
| I-18 | H | CH | OC₂H₅ | OCF₂H | |
| I-19 | H | CH | OC₂H₅ | NHCH₃ | |
| I-20 | H | CH | OC₂H₅ | N(CH₃)₂ | |
| I-21 | H | CH | OC₂H₅ | Cl | 158-159 |
| I-22 | H | CH | OC₂H₆ | Cl | 213⁽⁺⁾ |
| I-23 | H | CH | CH₃ | CH₃ | 153 |
| I-24 | H | CH | CH₃ | C₂H₅ | |
| I-25 | H | CH | CH₃ | CF₃ | |
| I-26 | H | CH | CH₃ | OCF₂H | |
| I-27 | H | CH | CH₃ | NHCH₃ | |
| I-28 | H | CH | CH₃ | N(CH₃)₂ | |
| I-29 | H | CH | CH₃ | Cl | 108-109 |
| I-30 | H | CH | CH₃ | Cl | >300⁽⁺⁾ |
| I-31 | H | CH | C₂H₅ | C₂H₅ | |
| I-32 | H | CH | C₂H₅ | CF₃ | |
| I-33 | H | CH | C₂H₅ | OCF₂H | |
| I-34 | H | CH | C₂H₅ | NHCH₃ | |
| I-35 | H | CH | C₂H₅ | Cl | |
| I-36 | H | CH | CF₃ | CF₃ | |
| I-37 | H | CH | CF₃ | OCF₂H | |
| I-38 | H | CH | CF₃ | NHCH₃ | |
| I-39 | H | CH | CF₃ | N(CH₃)₂ | |
| I-40 | H | CH | CF₃ | Cl | |
| I-41 | H | CH | OCF₂H | OCF₂H | |
| I-42 | H | CH | OCF₂H | NHCH₃ | |
| I-43 | H | CH | OCF₂H | N(CW₃)₂ | |
| I-44 | H | CH | OCF₂H | Cl | |
| I-45 | H | CH | NHCH₃ | NHCH₃ | |
| I-46 | H | CH | NHCH₃ | N(CH₃)₂ | |
| I-47 | H | CH | NHCH₃ | Cl | |
| I-48 | H | CH | N(CH₃)₂ | N(CH₃)₂ | |
| I-49 | H | CH | N(CH₃)₂ | Cl | |
| I-50 | H | CH | Cl | Cl | |
| I-51 | H | N | OCH₃ | OCH₃ | 255 |
| I-52 | H | N | OCH₃ | OCH₃ | 159-162⁽⁺⁾ |
| I-53 | H | N | OCH₃ | OC₂H₅ | |
| I-54 | H | N | OCH₃ | CH3 | |
| I-55 | H | N | OCH₃ | C₂H₅ | |
| I-56 | H | N | OCH₃ | CF₃ | |
| I-57 | H | N | OCH₃ | OCF₂H | |
| I-58 | H | N | OCH₃ | NHCH₃ | |
| I-59 | H | N | OCH₃ | N(CH₃)₂ | |
| I-60 | H | N | OCH₃ | N(CH₃)₂ | 156⁽⁺⁾ |
| I-61 | H | N | OCH₃ | Cl | |
| I-62 | H | N | OC₂H₅ | OC₂H₅ | |
| I-63 | H | N | OC₂H₅ | CH₃ | |
| I-64 | H | N | OC₂H₅ | C₂H₅ | |
| I-65 | H | N | OC₂H₅ | CF₃ | |
| I-66 | H | N | 0C₂H₅ | OCF₂H | |
| I-67 | H | N | OC₂H₅ | NHCH₃ | |
| I-68 | H | N | OC₂H₅ | N(CH₃)₂ | |
| I-69 | H | N | OC₂H₅ | Cl | |
| I-70 | H | N | OC₂H₅ | Cl | 213⁽⁺⁾ |
| I-71 | H | N | CH₃ | CH₃ | |
| I-72 | H | N | CH₃ | C₂H₅ | |
| I-73 | H | N | CH₃ | CF₃ | |
| I-74 | H | N | CH₃ | OCF₂H | |
| I-75 | H | N | CH3 | NHCH₃ | |
| I-76 | H | N | CH₃ | N(CH₃)₂ | |
| I-77 | H | N | CH₃ | Cl | |
| I-78 | H | N | C₂H₅ | C₂H₅ | |
| I-79 | H | N | C₂H₅ | CF₃ | |
| I-80 | H | N | C₂H₅ | OCF₂H | |
| I-81 | H | N | C₂H₅ | NHCH₃ | |
| I-82 | H | N | C₂H₅ | Cl | |
| I-83 | H | N | CF₃ | CF₃ | |
| I-84 | H | N | CF₃ | OCF₂H | |
| I-85 | H | N | CF₃ | NHCH₃ | |
| I-86 | H | N | CF₃ | N(CH₃)₂ | |
| I-87 | H | N | CF₃ | CI | |
| I-88 | H | N | OCF₂H | OCF₂H | |
| I-89 | H | N | OCF₂H | NHCH₃ | |
| I-90 | H | N | OCF₂H | N(CH₃)₂ | |
| I-91 | H | N | OCF₂H | Cl | |
| I-92 | H | N | NHCH₃ | NHCH₃ | |
| I-93 | H | N | NHCH₃ | N(CH₃)₂ | |
| I-94 | H | N | NHCH₃ | Cl | |
| I-95 | H | N | N(CH₃)₂ | N(CH₃)₂ | |
| I-96 | H | N | N(CH₃)₂ | Cl | |
| I-97 | H | N | Cl | Cl | |
| I-98 | CH₃ | N | OCH₃ | OCH₃ | |
| I-99 | CH₃ | N | OCH₃ | OC₂H₅ | |
| I-100 | CH₃ | N | OCH₃ | CH₃ | |
| I-101 | CH₃ | N | OCH₃ | C₂H₅ | |
| I-102 | CH₃ | N | OCH₃ | CF₃ | |
| I-103 | CH₃ | N | OCH₃ | OCF₂H | |
| I-104 | CH₃ | N | OCH₃ | NHCH₃ | |
| I-105 | CH₃ | N | OCH₃ | N(CH3)₂ | |
| I-106 | CH₃ | N | OCH₃ | Cl | |
| I-107 | CH₃ | N | OC₂H₅ | OC₂H₅ | |
| I-108 | CH₃ | N | OC₂H₅ | CH₃ | |
| I-109 | CH₃ | N | OC₂H₅ | C₂H₅ | |
| I-110 | CH₃ | N | OC₂H₅ | CF₃ | |
| I-111 | CH₃ | N | OC₂H₅ | OCF₂H | |
| I-112 | CH₃ | N | OC₂H₅ | NHCH₃ | |
| I-113 | CH₃ | N | OC₂H₅ | N(CH₃)₂ | |
| I-114 | CH₃ | N | OC₂H₅ | Cl | |
| I-115 | CH₃ | N | CH₃ | CH₃ | |
| I-116 | CH₃ | N | CH3 | C₂H₅ | |
| I-117 | CH₃ | N | CH₃ | CF₃ | |
| I-118 | CH₃ | N | CH₃ | OCF₂H | |
| I-119 | CH₃ | N | CH₃ | NHCH₃ | |
| I-120 | CH₃ | N | CH₃ | N(CH₃)₂ | |
| I-121 | CH₃ | N | CH₃ | Cl | |
| I-122 | CH₃ | N | C₂H₅ | C₂H₅ | |
| I-123 | CH₃ | N | C₂H₅ | CF₃ | |
| I-124 | CH₃ | N | C₂H₅ | OCF₂H | |
| I-125 | CH₃ | N | C₂H₅ | NHCH3 | |
| I-126 | CH₃ | N | C₂H₅ | Cl | |
| I-127 | CH₃ | N | CF₃ | CF₃ | |
| I-128 | CH₃ | N | CF₃ | OCF₂H | |
| I-129 | CH₃ | N | CF₃ | NHCH₃ | |
| I-130 | CH₃ | N | CF₃ | N(CH₃)₂ | |
| I-131 | CH₃ | N | CF₃ | Cl | |
| I-132 | CH₃ | N | OCF₂H | OCF₂H | |
| I-133 | CH₃ | N | OCF₂H | NHCH₃ | |
| I-134 | CH₃ | N | OCF₂H | N(CH₃)₂ | |
| I-135 | CH₃ | N | OCF₂H | Cl | |
| I-136 | CH₃ | N | NHCH₃ | NHCH₃ | |
| I-137 | CH₃ | N | NHCH₃ | N(CH₃)₂ | |
| I-138 | CH₃ | N | NHCH₃ | Cl | |
| I-139 | CH₃ | N | N(CH₃)₂ | N(CH₃)₂ | |
| I-140 | CH₃ | N | N(CH₃)₂ | Cl | |
| I-141 | CH₃ | N | Cl | Cl | |
| I-142 | H | N | N(CH₃)₂ | OCH₂CF₃ | 158 |
| I-143 | H | CH | Cl | OCH₂CF₃ | 204-205 |
| I-144 | H | CH | Cl | OCH₂CF₃ | |
| I-145 | H | CH | Cl | OCH₂CF₃ | 207⁽⁺⁾ |

Die herbiziden Wirkstoffe aus der Reihe der Pyridyl-Sulfonylharnstoffe sind in den erfindungsgemäßen Ölsuspensionskonzentraten im allgemeinen in Mengen von 0,01 bis 50 Gew.-%, bevorzugt 0,1 bis 30 Gew.-% enthalten, dabei bezieht sich die Angabe "Gew.-%" hier und in der gesamten Beschreibung, wenn nicht anders definiert, auf das relative Gewicht der jeweiligen Komponente bezogen auf das Gesamtgewicht der Formulierung.
A7) Alkoxyphenoxysulfonylharnstoffe, wie sie z.B. in EP-A 0 342 569 beschrieben sind, vorzugsweise solche der Formel 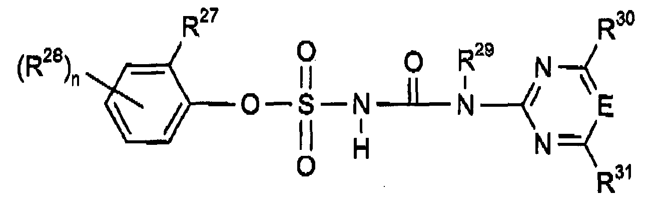 worin
- E: CH oder N, vorzugsweise CH,
- R²⁷: Ethoxy, Propoxy oder Isopropoxy,
- R²⁸: Halogen, NO₂, CF₃, CN, (C₁-C₄)-Alkyl, (C₁-C₄)-Alkoxy, (C₁-C₄)-Alkylthio oder (C₁-C₃)-Alkoxy-carbonyl, vorzugsweise in 6-Position am Phenylring,
- n: 0, 1, 2 oder 3, vorzugsweise 0 oder 1,
- R²⁹: Wasserstoff, (C₁-C₄)-Alkyl oder (C₃-C₄)-Alkenyl,
- R³⁰, R³¹: unabhängig voneinander Halogen, (C₁-C₂)-Alkyl, (C₁-C₂)-Alkoxy, (C₁-C₂)-Halogenalkyl, (C₁-C₂)-Halogenalkoxy oder (C₁-C₂)-Alkoxy-(C₁-C₂)-alkyl, vorzugsweise OCH₃ oder CH₃, bedeuten, z.B. 3-(4,6-Dimethoxypyrimidin-2-yl)-1-(2-ethoxyphenoxy)-sulfynylharnstoff, oder deren Salze;
A8) Imidazolylsulfonylharnstoffe, z.B.
MON 37500, Sulfosulfuron (s. Brighton Crop Prot. Conf. 'Weeds', 1995, S: 57), und andere verwandte Sulfonylharnstoff-Derivate und Mischungen daraus;
Typische Vertreter dieser Wirkstoffe sind unter anderem die nachfolgend aufgeführten Verbindungen: Amidosulfuron, Azimsulfuron, Bensulfuron-Methyl, Chlorimuron-Ethyl, Chlorsulfuron, Cinosulfuron, Cyclosulfamuron, Ethametsulfuron-Methyl, Ethoxysulfuron, Flazasulfuron, Flupyrsulfuron-Methyl-Natrium, Halosulfuron-Methyl, Imazosulfuron, Metsulfuron-Methyl, Nicosulfuron, Oxasulfuron, Primisulfuron-Methyl, Prosulfuron, Pyrazosulfuron-Ethyl, Rimsulfuron, Sulfometuron-Methyl, Sulfosulfuron, Thifensulfuron-Methyl, Triasulfuron, Tribenuron-Methyl, Triflusulfuron-Methyl, lodosulfuron-Methyl und dessen Natriumsalz (WO 92/13845), Mesosulfuron-Methyl und dessen Natriumsalz (Agrow Nr. 347, 3. März 2000, Seite 22 (PJB Publications Ltd. 2000)) und Foramsulfuron und dessen Natriumsalz (Agrow Nr. 338, 15. Oktober 1999, Seite 26 (PJB Publications Ltd, 2000)).
A9) Phenylsulfonylaminocarbonyltriazolinone
Beispiele für Verbindungen aus der Gruppe der sind z.B. Flucarbazone oder Propoxycarbazone und/oder deren Salze.
A10) (Het)Aryl-sulfonyl-aminocarbonyl-triazolinone
Thien-3-yl-sulfonylamino(thio)carbonyl-triazolin(thi)on der allgemeinen Formel (I) 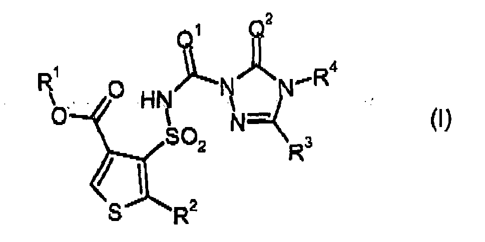 in welcher
- Q¹: für O (Sauerstoff) oder S (Schwefel) steht,
- Q²: für O (Sauerstoff) oder S (Schwefel) steht,
- R¹: für gegebenenfalls durch Cyano, Halogen oder C₁-C₄-Alkoxy substituiertes Alkyl mit 1 bis 6 Kohlenstoffatomen, für jeweils gegebenenfalls durch Cyano oder Halogen substituiertes Alkenyl oder Alkinyl mit jeweils 2 bis 6 Kohlenstoffatomen, für jeweils gegebenenfalls durch Cyano, Halogen oder C₁-C₄-Alkyl substituiertes Cycloalkyl oder Cycloalkylalkyl mit jeweils 3 bis 6 Kohlenstoffatomen in der Cycloalkylgruppe und gegebenenfalls 1 bis 4 Kohlenstoffatomen im Alkylteil, für jeweils gegebenenfalls durch Nitro, Cyano, Halogen, C₁-C₄-Alkyl oder C₁-C₄-Alkoxy substituiertes Aryl oder Arylalkyl mit jeweils 6 oder 10 Kohlenstoffatomen in der Arylgruppe und gegebenenfalls 1 bis 4 Kohlenstoffatomen im Alkylteil, oder für jeweils gegebenenfalls durch Nitro, Cyano, Halogen, C₁-C₄-Alkyl oder C₁-C₄-Alkoxy substituiertes Heterocyclyl oder Heterocyclylalkyl mit jeweils bis zu 6 Kohlenstoffatomen und zusätzlich 1 bis 4 Stickstoffatomen und/oder 1 bis 2 Sauerstoff oder Schwefelatomen in der Heterocyclylgruppe und gegebenenfalls 1 bis 4 Kohlenstoffatomen im Alkylteil steht,
- R²: für Wasserstoff, C₁-C₄-Alkyl, Cyano, Nitro, Halogen, für jeweils gegebenenfalls durch Cyano, Halogen oder C₁-C₄-Alkoxy substituiertes Alkyl, Alkoxy, Alkoxycarbonyl, Alkylthio, Alkylsulfinyl oder Alkylsulfonyl mit jeweils 1 bis 6 Kohlenstoffatomen in der Alkylgruppe, oder für jeweils gegebenenfalls durch Cyano oder Halogen substituiertes Alkenyl, Alkinyl, Alkenyloxy oder Alkinyloxy mit jeweils 2 bis 6 Kohlenstoffatomen in der Alkenyl- oder Alkinylgruppe steht,
- R³: für Wasserstoff, Hydroxy, Mercapto, Amino, Cyano, Fluor, Chlor, Brom, Iod, für gegebenenfalls durch Fluor, Chlor, Brom, Cyano, C₁-C₄-Alkoxy, C₁-C₄-Alkylcarbonyl oder C₁-C₄-Alkoxy-carbonyl substituiertes Alkyl mit 1 bis 6 Kohlenstoffatomen, für jeweils gegebenenfalls durch Fluor, Chlor und/oder Brom substituiertes Alkenyl oder Alkinyl mit jeweils 2 bis 6 Kohlenstoffatomen, für jeweils gegebenenfalls durch Fluor, Chlor, Cyano, C₁-C₄-Alkoxy oder C₁-C₄-Alkoxy-carbonyl substituiertes Alkoxy, Alkylthio, Alkylamino oder Alkylcarbonylamino mit jeweils 1 bis 6 Kohlenstoffatomen in der Alkylgruppe, für Alkenyloxy, Alkinyloxy, Alkenylthio, Alkinylthio, Alkenylamino oder Alkinylamino mit jeweils 3 bis 6 Kohlenstoffatomen in der Alkenyl- oder Alkinylgruppe, für Dialkylamino mit jeweils 1 bis 4 Kohlenstoffatomen in den Alkylgruppen, für jeweils gegebenenfalls durch Methyl und/oder Ethyl substituiertes Aziridino, Pyrrolidino, Piperidino oder Morpholino, für jeweils gegebenenfalls durch Fluor, Chlor, Brom, Cyano und/oder C₁-C₄-Alkyl substituiertes Cycloalkyl, Cycloalkenyl, Cycloalkyloxy, Cycloalkylthio, Cycloalkylamino, Cycloalkylalkyl, Cycloalkylalkoxy, Cycloalkylalkylthio oder Cycloalkylalkylamiiio mit jeweils 3 bis 6 Kohlenstoffatomen in der Cycloalkyl-bzw. Cycloalkenylgruppe und gegebenenfalls 1 bis 4 Kohlenstoffatomen im Alkylteil, oder für jeweils gegebenenfalls durch Fluor, Chlor, Brom, Cyano, Nitro, C₁-C₄-Alkyl, Trifluormethyl, C₁-C₄-Alkoxy und/oder C₁-C₄-Alkoxycarbonyl substituiertes Aryl, Arylalkyl, Aryloxy, Arylalkoxy, Arylthio, Arylalkylthio, Arylamino oder Arylalkylamino mit jeweils 6 oder 10 Kohlenstoffatomen in der Arylgruppe und gegebenenfalls 1 bis 4 Kohlenstoffatomen im Alkylteil steht,
- R⁴: für Wasserstoff, C₁-C₄-Alkyl, Hydroxy, Amino, Cyano, für C₂-C₁₀-Alkyliden-amino, für gegebenenfalls durch Fluor, Chlor, Brom, Cyano, C₁-C₄-Alkoxy, C₁-C₄-Alkylcarbonyl oder C₁-C₄-Alkoxy-carbonyl substituiertes Alkyl mit 1 bis 6 Kohlenstoffatomen, für jeweils gegebenenfalls durch Fluor, Chlor und/oder Brom substituiertes Alkenyl oder Alkinyl mit jeweils 2 bis 6 Kohlenstoffatomen, für jeweils gegebenenfalls durch Fluor, Chlor, Brom, Cyano, C₁-C₄-Alkoxy oder C₁-C₄-Alkoxy-carbonyl substituiertes Alkoxy, Alkylamino oder Alkylcarbonylamino mit jeweils 1 bis 6 Kohlenstoffatomen in der Alkylgruppe, für Alkenyloxy mit 3 bis 6 Kohlenstoffatomen, für Dialkylamino mit jeweils 1 bis 4 Kohlenstoffatomen in den Alkylgruppen, für jeweils gegebenenfalls durch Fluor, Chlor, Brom, Cyano und/oder C₁-C₄-Alkyl substituiertes Cycloalkyl, Cycloalkylamino oder Cycloalkylalkyl mit jeweils 3 bis 6 Kohlenstoffatomen in der Alkylgruppe und gegebenenfalls 1 bis 4 Kohlenstoffatomen im Alkylteil, oder für jeweils gegebenenfalls durch Fluor, Chlor, Brom, Cyano, Nitro, C₁-C₄-Alkyl, Trifluormethyl und/oder C₁-C₄-Alkoxy substituiertes Aryl oder Arylalkyl mit jeweils 6 oder 10 Kohlenstoffatomen in der Arylgruppe und gegebenenfalls 1 bis 4 Kohlenstoffatomen im Alkylteil steht, oder
- R³ und R⁴: zusammen für gegebenenfalls verzweigtes Alkandiyl mit 3 bis 6 Kohlenstoffatomen stehen,

**- sowie Salze der Verbindungen der Formel (I) -**

| | | | | |
|---|---|---|---|---|
| 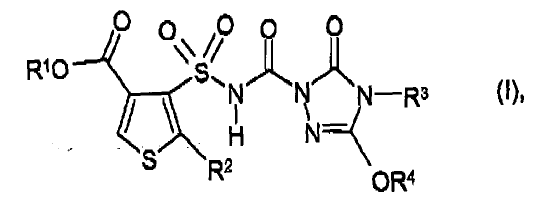 | | | | |

| Nr. | R¹ | R² | R³ | R⁴ |
|---|---|---|---|---|
| A1 | Ethyl | Ethyl | Ethyl | Ethyl |
| A2 | Ethyl | Ethyl | Ethyl | Methyl |
| A3 | Ethyl | Ethyl | Methyl | Ethyl |
| A4 | Ethyl | Methyl | Ethyl | Ethyl |
| A5 | Methyl | Ethyl | Ethyl | Ethyl |
| A6 | Ethyl | Ethyl | Methyl | Methyl |
| A7 | Methyl | Ethyl | Ethyl | Methyl |
| A8 | Methyl | Methyl | Ethyl | Ethyl |
| A9 | Ethyl | Methyl | Ethyl | Methyl |
| A10 | Methyl | Ethyl | Methyl | Ethyl |
| A11 | Ethyl | Methyl | Methyl | Ethyl |
| A12 | Methyl | Methyl | Methyl | Methyl |
| A13 | Methyl | Methyl | Methyl | Ethyl |
| A14 | Methyl | Methyl | Ethyl | Methyl |
| A15 | Methyl | Ethyl | Methyl | Methyl |
| A16 | Ethyl | Methyl | Methyl | Methyl |

B) Herbizide vom Typ der Phenoxyphenoxy- und Heteroaryloxyphenoxycarbonsäure-Derivate, wie
B1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl),
   2-(4-(4-Brom-2-chlorphenoxy)-phenoxy)-propionsäuremethylester (DE-A 26 01 548),
   2-(4-(4-Brom-2-fluorphenoxy)-phenoxy)-propionsäuremethylester (US-A 4,808,750),
   2-(4-(2-Chlor-4-trifluormethylphenoxy)-phenoxy)-propionsäuremethylester (DE-A 24 33 067),
   2-(4-(2-Fluor-4-trifluormethylphanoxy)-phenoxy)-propionsäuremethylester (US-A 4,808,750),
   2-(4-(2,4-Dichforbenzyl)-phenoxy)-propionsäuremethylester (DE-A 24 17 487),
   4-(4-(4-Trifluormethylphenoxy)-phenoxy)-pent-2-en-säureethylester,
   2-(4-(4-Trifluormethylphonoxy)-phenoxy)-propionsäuremethylester (DE-A 24 33 067);
B2) "Einkernige" Heteroaryloxyphenoxy-alkancarbonsäure-Derivate, z.B.
   2-(4-(3,5-Dichlorpyridyl-2-oxy)-phenoxy)-propionsäureethylester (EP-A 0 002 925),
   2-(4-(3,5-Dichlorpyridyl-2-oxy)-phenoxy)-propionsäurepropargylester (EP-A 0 003114),
   2-(4-(3-Chfor-5-trifluormethyl-2-pyridyloxy)-phenoxy)-propionsäuremethylester (EP-A 0 003 890),
   2-(4-(3-Chlor-5-trifluormethyl-2-pyridyloxy)-phenoxy)-propionsäureethylester (EP-A 0 003 890),
   2-(4-(5-Chlor-3-fluor-2-pyridyloxy)-phenoxy)-propionsäurepropargylester (EP-A 0191 736),
   2-(4-(5-Trifluormethyl-2-pyridyloxy)-phenoxy)-propionsäurebutylester (Fluazifop-butyl);
B3) "Zweikernige" Heteroaryloxyphenoxy-alkancarbonsäure-Derivate, z.B.
   2-(4-(6-Chlor-2-chinoxalyloxy)-phenoxy)-propionsäuremethylester und -ethylester (Quizalofopmethyl und Quizalofopethyl),
   2-(4-(6-Fluor-2-chinoxalyloxy)-phenoxy)-propionsäuremethylester (s. J. Pest. Sci. Vol. 10, 61 (1985)),
   2-(4-(6-Chlor-2-chinoxalyloxy)-phenoxy)-propionsäure-2-isopropylidenaminooxy-ethylester (Propaquizafop),
   2-(4-(6-Chlorbenzoxazol-2-yl-oxy)-phenoxy)-propionsäureethylester (Fenoxaprop-ethyl), dessen D(+) Isomer (Fenoxaprop-P-ethyl) und 2-(4-(6-Chlorbenzthiazol-2-yloxy)-phenoxy)-propionsäureethylester (DE-A 26 40 730),
   2-(4-(6-Chlorchinoxalyloxy)-phenoxy)-propionsäure-tetrahydro-2-furylmethylester (EP-A 0 323 727);
C) Chloracetanilide, z.B.
N-Methoxymethyl-2,6-diethyl-chloracetanilid (Alachlor),
N-(3-Methoxyprop-2-yl)-2-methyl-6-ethyl-chloracetanilid (Metolachlor),
N-(3-Methyl-1,2,4-oxadiazol-5-yl-methyl)-chloressigsäure-2,6-dimethylanilid,
N-(2,6-Dimethylphenyl)-N-(1-pyrazolylmethyl)-chloressigsäureamid (Metazachlor);
D) Thlocarbamate, z.B.
S-Ethyl-N,N-dipropylthiocarbamat (EPTC),
S-Ethyl-N,N-diisobutylthiocarbamat (Butylate);
E) Cyclohexandionoxime, z.B.
3-(1-Allyloxyiminobutyl)-4-hydroxy-6,6-dimethyl-2-oxocyclohex-3-encarbonsäuremethylester, (Alloxydim),
2-(1-Ethoxyiminobutyl)-5-(2-ethylthiopropyl)-3-hydroxy-cyclohex-2-en-1-on (Sethoxydim),
2-(1-Ethoxyiminobutyl)-5-(2-phenylthiopropyl)-3-hydroxy-cyclohex-2-en-1-on (Cloproxydim),
2-(1-(3-Chlarallyloxy)-iminobutyl)-5-(2-ethylthiopropyl)-3-hydroxy-cyclohex-2-en-1on,
2-(1-(3-Chlorallyloxy)-iminopropyl)-5-(2-ethylthiopropyl)-3-hydroxy-cyclohex-2-en-1-on (Clethodim),
2-(1-Ethoxyiminobutyl)-3-hydroxy-5-(thian-3-yl)-cyclohex-2-en-on (Cycloxydim),
2-(1-Ethoxyiminopropyl)-5-(2,4,6-trimethylphenyl)-3-hydroxy-cyclohex-2-en-1-on (Tralkoxydim);
F) Imidazolinone, z.B.
2-(4-)sopropyl-4-methyl-5-oxo-2-)midazolin-2-yl)-5-methylbenzoesäure-methylester
und 2-(4-Isopropyl-4-methyl-5-oxo-2-imidazolin-2-yl)-4-methylbenzaesäure (Imazamethabenz),
5-Ethyl-2-(4-isopropyl-4-methyl-5-oxo-2-imidazolin-2-yl)-pyridin-3-carbonsäure (Imazethapyr),
2-(4-Isapropyl-4-methyl-5-oxo-2-imidazolin-2-yl)-chinolin-3-carbonsäure (Imazaquin),
2-(4-Isopropyl-4-methyl-5-oxo-2-imidazolin-2-yl)-pyridin-3-carbonsäure (Imazapyr),
5-Methyl-2-(4-Isopropyl-4-methyl-5-oxo-2-imidazolin-2-yl)-pyridin-3-carbonsäure (Imazethamethapyr);
G) Triazofapyrimidinsulfonamid-Derivate, z.B.
N-(2,6-Difluorphenyl)-7-methyl-1,2,4-triazolo[1,5-c]pyrimidin-2-sulfonamid (Flumetsulam),
N-(2,6-Dichlor-3-methylphenyl)-6,7-dimethoxy-1,2,4-thazolo[1,5-c]pyrimidin-2-sulfonamid,
N-(2,6-Difluorphenyl)-7-fluor-5-methoxy-1,2,4-triazolo[1,5-c]-pyrimidin-2-sulfonamid.
N-(2,6-Dichlor-3-methylphenyl)-7-chlor-5-methoxy-1,2,4-triazolo[1,5-c]-pyrimidin-2-sulfonamid,
N-(2-Chlor-6-methoxycarbonyl)-5,7-dimethyl-1,2,4-triazolo[1,5-c]-pyrimidin-2-sulfonamid (EP-A 0 343 752, US-A 4,988,812);
H) Benzoylcyclohexandione, z.B.
2-(2-Chlor-4-methylsulfonylbenzoyl)-cyclohexan-1,3-dion (SC-0051, EP-A 0137 963), 2-(2-Nitrobenzoyl)-4,4-dimethyl-cyclohexan-1,3-dion (EP-A 0 274 634),
2-(2-Nitro-3-methylsulfonylbenzoyl)-4,4-dimethylcyclohexan-1,3-dion (WO 91/13548);
I) Pyrimidinyloxy-pyridincarbonsäure- bzw. Pyrimldinyloxybenzoesäure-Derivate, z.B.
3-(4,6-Dimethoxypyrimidin-2-yl)-oxy-pyridin-2-carbonsäurebenzylester (EP-A 0 249 707),
3-(4,6-Dimethoxypyrimidin-2-yl)-oxy-pyridin-2-carbonsäuremethylester (EP-A 0 249 707),
2,6-Bis[(4,6-dimethoxypyrimidin-2-yl)-oxy]-benzoesäure (EP-A 0 321 846),
2,6-Bis[(4,6-dimethoxypyrimidin-2-yl)-oxy]-benzoesäure-1-(ethoxycarbonyl-oxyethyl)-ester (EP-A 0 472 113);
J) S-(N-Aryl-N-alkyl-carbamoylmethyl)-dithlophosphonsäureester, wie S-[N-(4-Chlorphenyl)-N-isopropyl-carbamoylmethyl]-O,O-dimethy-dithiophosphat (Anilophos).
K) 2,4-Diamino-s-triazine, vorzugsweise Alkylazine.
Bevorzugt sind auch Salze, vorzugsweise Säureadditionssalze der Verbindungen, beispielsweise deren Hydrochloride.
L) phosphorhaltige Herbizide, z.B. eine oder mehrere Verbindungen der Formel (IV) oder deren Derivate wie Salze, 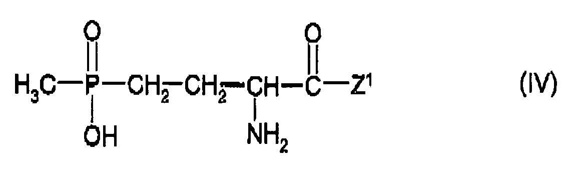 worin
Z¹ einen Rest der Formel -OM, -NHCH(CH₃)CONHCH(CH₃)CO₂M oder -NHCH(CH₃)CONHCH[CH₂CH(CH₃)₂]CO₂M und
M = H oder ein Salz bildendes Kation bedeuten,
und/oder eine oder mehrere Verbindungen der Formel (V) oder deren Derivate wie Salze, 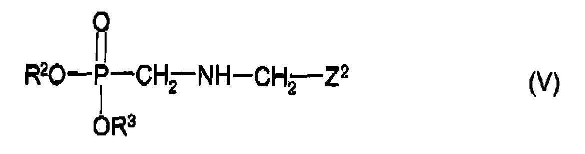 worin
- Z²: einen Rest der Formel CN oder CO₂R¹ bedeutet, in dem R¹ = Q oder ein Salz bildendes Kation ist und dabei Q = H, Alkyl, Alkenyl, Alkoxyalkyl oder C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, und
- R²,R³: jeweils unabhängig voneinander H, Alkyl, C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, oder Biphenyl oder ein Salz bildendes Kation bedeuten.
Beispiele für Wirkstoffe der Formel (IV) und (V) sind folgende:
- Glufosinate und dessen Ammoniumsalz in racemischer Form, d.h. 2-Amino-4-[hydroxy(methyl)phosphinoyl]-butansäure bzw. dessen Ammoniumsalz,
- das L-Enantiomer von Glufosinate und dessen Ammoniumsalz,
- Bilanafos/Bialaphos, d.h. L-2-Amino-4-[hydroxy(methyl)phosphinoyl]-butanoyl-L-alaninyl-L-alanin und dessen Natriumsalz
- Glyphosate.
M) Carbamate, z.B. Asulam, Carbetamide, Chloropham und Propham;
N) Benzofurane, z.B. Benfuresate und Ethofumesate;
O) Phytohormone;
P) Auxine und Auxinanaloga, z.B. 4-Indol-3-buttersäure, Indol-3-essigsäure, 1-Naphthylessigsäure, 2-(1-Naphthyl)acetamid und 2-Naphthyloxyessigsäure;
Q) Zytokinine, z.B. Cythokinin, Kinetin und 6-Benzylaminopurin;
R) Gibberelline, z.B. Gibberillinsäure, Gibberillin A4 und A7;
S) Abzissinsäure- und deren Derivate;
T) Ethylenvorläufer, z.B. Ethephon;
U) Herbizide aus der Gruppe der Fettsäuresynthetase-Inhibitoren;
V) Harnstoffe, z.B. Chlorotoluron, Dimefuron, Diuron, Fluometuron, Isoproturon, Isouron, Karbutilate, Linuron, Methabenzthiazuron, Metobenzuron, Metoxuron, Monolinuron, Neburon, Siduron und Tebuthiuron und
W) Metamitron.
X) Hydroxybenzonitrile, z.B. wie Bromoxynil und loxynil und deren Salze und Ester, wie Bromoxynilactanoat und loxyniloctanoat.

Die agrochemischen Wirkstoffe können auch Wachstumsregulatoren sein. Beispiele hierfür sind Terbufos, Cyclanilide und Thidiazuron.

Die Herbizide (Pflanzenwuchsregulatoren) der Gruppen A bis X sind beispielsweise aus den oben jeweils genannten Schriften und/oder aus "The Pesticide Manual", 12. Auflage (2000) und 13. Auflage (2003), The British Crop Protection Council, "Agricultural Chemicals Book II - Herbicides -", by W.T. Thompson, Thompson Publications, Fresno CA, USA 1990 und "Farm Chemicals Handbook '90", Meister Publishing Company, Willoughby OH, USA,1990, bekannt.

### Safener

Die agrochemischen Wirkstoffe können auch Safener sein. Beispiele hierfür sind unter anderem:
a) Verbindungen der Formeln (S-II) bis (S-IV), 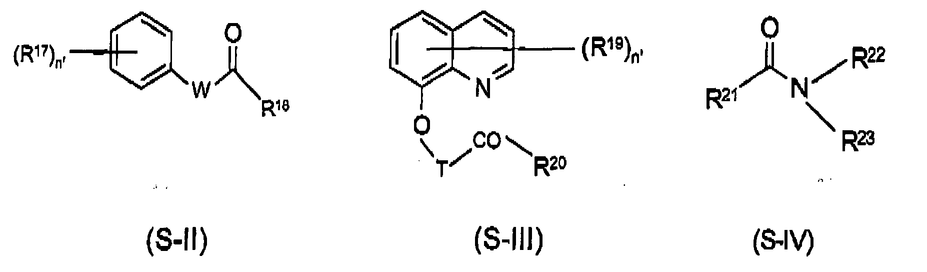 wobei die Symbole und Indizes folgende Bedeutungen haben:
   - n': ist eine natürliche Zahl von 0 bis 5, vorzugsweise 0 bis 3;
   - T: ist eine (C₁ oder C₂)-Alkandiylkette, die unsubstituiert oder mit einem oder zwei (C₁-C₄)Alkylresten oder mit [(C₁-C₃)-Alkoxy]-carbonyl substituiert ist;
   - W: ist ein unsubstitulerter oder substituierter divalenter heterocyclischer Rest aus der Gruppe der teilungesättigten oder aromatischen Fünfring-Heterocyclan mit 1 bis 3 Heteroringatomen des Typs N oder O, wobei mindestens ein N-Atom und höchstens ein O-Atom im Ring enthalten ist, vorzugsweise ein Rest aus der Gruppe (W1) bis (W4), 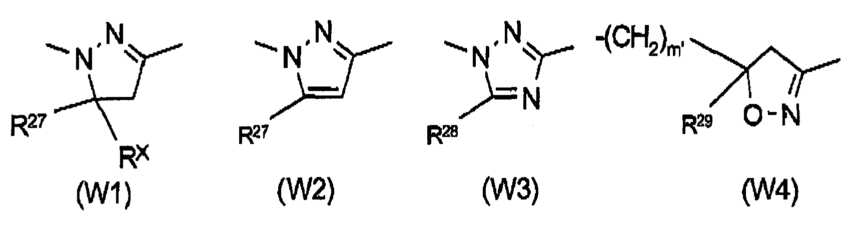
   - m': ist 0 oder 1;
   - R¹⁷, R¹⁹: sind gleich oder verschieden Halogen, (C₁-C₄)Alkyl, (C₁-C₄)Alkoxy, Nitro oder (C₁-C₄)Haloalkyl,
   - R¹⁸,: R²⁰ sind gleich oder verschieden OR²⁴, SR²⁴ oder NR²⁴R²⁶ oder ein gesättigter oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (S-II) bzw. (S-III) verbunden ist und unsubstituiert oder durch Reste aus der Gruppe (C₁-C₄)Alkyl, (C₁-C₄)Alkoxy oder gegebenenfalls substituiertes Phenyl substituiert ist, vorzugsweise ein Rest der Formel OR²⁴, NHR²⁵ oder N(CH₃)₂, insbesondere der Formel OR²⁴;
   - R²⁴: ist Wasserstoff oder ein unsubstituierter oder substituierter aliphatischer Kohlenwasserstoffrest, vorzugsweise mit insgesamt 1 bis 18 C-Atomen;
   - R²⁵: ist Wasserstoff, (C₁-C₆)Alkyl, (C₁-C₆)Alkoxy oder substituiertes oder unsubstituiertes Phenyl;
   - R^{x}: ist H, (C₁-C₈)Alkyl, C₁-C₈(Haloalkyl), (C₁-C₄)Alkoxy(C₁-C₈)Alkyl, Cyano oder COOR²⁶, worin R²⁶ Wasserstoff, (C₁-C₈)Alkyl, (C₁-C₈)Haloalkyl, (C₁-C₄)Alkoxy-(C₁-C₄)alkyl, (C₁-C₆)Hydroxyalkyl, (C₃-C₁₂)Cycloalkyl oder Tri-(C₁-C₄)-alkylsilyl ist;
   - R²⁷,: R²⁸, R²⁹ sind gleich oder verschieden Wasserstoff, (C₁-C₈)Alkyl, (C₁-C₈)Haloalkyl, (C₃-C₁₂)Cycloalkyl oder substituiertes oder unsubstituiertes Phenyl;
   - R²¹: ist (C₁-C₄)Alkyl, (C₁-C₄)Haloalkyl, (C₂-C₄)Alkenyl, (C₂-C₄)Haloalkenyl, (C₃-C₇)Cycloalkyl, vorzugsweise Dichlormethyl;
   - R²², R²³: ist gleich oder verschieden Wasserstoff, (C₁-C₄)Alkyl, (C₂-C₄)Alkenyl, (C₂-C₄)Alkinyl, (C₁-C₄)Haloalkyl, (C₂-C₄)Haloalkenyl, (C₁-C₄)Alkylcarbamoyl-(C₁-C₄)alkyl, (C₂-C₄)Alkenylcarbamoyl-(C₁-C₄)alkyl, (C₁-C₄)Alkoxy-(C₁-C₄)alkyl, Dioxolanyl-(C₁-C₄)alkyl, Thiazolyl, Furyl, Furylalkyl, Thienyl, Plperidyl, substituiertes oder unsubstituiertes Phenyl, oder R²² und R²³ bilden zusammen einen substituierten oder unsubstituierten heterocyclischen Ring, vorzugsweise einen Oxazolldin-, Thiazolidin-, Piperidin-, Morpholin-, Hexahydropyrimidin- oder Benzoxazinring;
   vorzugsweise Safener folgender Untergruppen von Verbindungen der Formeln (S-II) bis (S-IV):
   - Verbindungen vom Typ der Dichlorphenylpyrazolin-3-carbonsäure (d.h. der Formel (S-II), worin W = (W1) und (R¹⁷)_{n'} = 2,4-Cl₂), vorzugsweise Verbindungen wie 1-(2,4-Dichlorphenyl)-6-(ethoxycarbonyl)-5-methyl-2-pyrazolin-3-carbonsäureethylester (II-1, Mefenpyr-diethyl), Mefenpyr-dimethyl und Mefenpyr (II-0), und verwandte Verbindungen, wie sie in der WO-A-91/07874 beschrieben sind;
   - Derivate der Dichlorphenylpyrazoloarbonsäure (d.h. der Formel (S-II), worin W = (W2) und (R¹⁷)_{n'} = 2,4-Cl₂ ist), vorzugsweise Verbindungen wie 1-(2,4-Dichlorphenyl)-5-methyl-pyrazol-3-carbonsäureethylester (II-2), 1-(2,4-Dichlorphenyl)-5-isopropyl-pyrazol-3-carbonsäureethylester (II-3), 1-(2,4-Dichlorphenyl)-5-(1,1-dimethyl-ethyl)pyrazol-3-carbonsäureethylester (II-4), 1-(2,4-Dichlorphenyl)-5-phenyl-pyrazol-3-carbonsäureethylester (II-5) und verwandte Verbindungen, wie sie in EP-A-0333131 und EP-A-0269806 beschrieben sind;
   - Verbindungen vom Typ der Triazolcarbonsäuren (d.h. der Formel (S-II), worin W = (W3) und (R¹⁷)_{n'} = 2,4-Cl₂ ist), vorzugsweise Verbindungen wie Fenchlorazol-ethyl, d.h. 1-(2,4-Dichlorphenyl)-5-trichlormethyl-(1H)-1,2,4-triazol-3-carbonsäureethylester (II-6), und verwandte Verbindungen (siehe EP-A-0174582 und EP-A-0346620);
   - Verbindungen vom Typ der 5-Benzyl- oder 5-Phenyl-2-isoxazolin-3-carbonsäure oder der 5,5-Diphenyl-2-Isoxazolin-3-carbonsäure wie Isoxadifen (II-12), (worin W = (W4) ist), vorzugsweise Verbindungen wie 5-(2,4-Dichlorbenzyl)-2-isoxazolin-3-carbonsäureethylester (II-7) oder 5-Phenyl-2-isoxazolin-3-carbonsäureuthylester (11.8) und verwandte Verbindungen, wie sie in WO-A- 91/08202 beschrieben sind, oder der 5,5-Diphenyl-2-isoxazolin-carbonsäureethylester (II-9, Isoxadifen-ethyl) oder -n-propylester (II-10) oder der 5-(4-Fluorphenyl)-5-phenyl-2-isoxazolin-3-carbonsäureethylester (II-11), wie sie in der WO-A-95/07897 beschrieben sind.
   - Verbindungen vom Typ der 8-Chinolinoxyessigsäure, z.B. solche der Formel (S-III), worin (R¹⁹)_{n'} = 5-Cl, R²⁰ = OR²⁴ und T = CH₂ ist, vorzugsweise die Verbindungen (5-Chlor-8-chinolinoxy)essigsäure-(1-methylhexyl)-sster (III-1, Cloquintocet-mexyl), (5-Chlor-8-chinolinoxy)essigsäure-(1,3-dimethyl-but-1-yl)-ester (III-2), (5-Chlor-8-chinolinoxy)essigsäure-4-allyl-oxy-butylester (III-3), (5-Chior-8-chinolinoxy)essigsäure-1-allyloxy-prop-2-ylester (III-4), (5-Chlor-8-chinolinoxy)essigsäureethylester (III-5), (5-Chlor-8-chinolinoxy)essigsäuremethylester (III-6), (5-Chlor-8-chinollnoxy)essigsäureallylester (III-7), (5-Chlor-8-chinolinoxy)essigsäure-2-(2-propyliden-iminoxy)-1-ethylester (III-8), (5-Chlor-8-chinolinoxy)essigsäure-2-oxo-prop-1-ylester (III-9), (5-Chlor-8-chinolinoxy)essigsäure (III-10) und dessen Salze wie sie z.B. in der WO-A-02/34048 beschrieben sind, und verwandte Verbindungen, wie sie in EP-A-0860750, EP-A-0094349 und EP-A-0191736 oder EP-A-0492366 beschrieben sind.
   - Verbindungen vom Typ der (5-Chlor-8-chinolinoxy)-malonsäure, d.h. der Formel (S-III), worin (R¹⁹)_{n'} = 5-Cl, R²⁰ = OR²⁴, T = -CH(COO-Alkyl)- ist, vorzugsweise die Verbindungen (5-Chlor-8-chinolinoxy)-malonsäure-diethylester (III-11), (5-Chlor-8-chinolinoxy)-malonsäurediallylester, (5-Chlor-8-chinolinoxy)-malonsäure. methyl-ethylester und verwandte Verbindungen, wie sie in EP-A-0582198 beschrieben sind.
   - Verbindungen vom Typ der Dichloracetamide, d.h. der Formel (S-IV), vorzugsweise: N,N-Diallyl-2,2-dichloracetamid (Dichlormid (IV-1), aus US 4,137,070), 4-Dichloracetyl-3,4-dihydro-3-methyl-2H-1,4-benzoxazin (IV-2, Benoxacor, aus EP 0149974), N1,N2-Diallyl-N2-dichloracetylglycinamid (DKA-24 (IV-3), aus HU 2143821), 4-Dichloracetyl-1-oxa-4-aza-spiro[4,5]decan (AD-67), 2,2-Dichlor-N-(1,3-dioxolan-2-ylmethyl)-N-(2-propenyl)acetamid (PPG-1292), 3-Dichloracetyl-2,2,6-trimethyloxazolidin (R-29148, IV-4), 3-Dichloracetyl-2,2-dimethyl-5-phenyloxazolidin, 3-Dichloracetyl-2,2-dimethyl-5-(2-thienyl)oxazolidin, 3-Dichloracetyl-5-(2-furanyl)-2,2-dimethyloxazolidin (Furilazole (IV-5), MON 13900), 1-Dichloracetyl-hexahydro-3,3,8a-trimethylpyrrolo[1,2-a]pyrimidin-6(2H)-on (Dicyclonon, BAS 145138),
b) eine oder mehreren Verbindungen aus Gruppe:
   1,8-Naphthalsäureanhydrid, Methyl-diphenylmethoxyacetat, 1-(2-Chlorbenzyl)-3-(1-methyl-1-phenylethyl)harnstoff (Cumyluron), O,O-Diethyl S-2-ethylthioethyl phosphordithioat (Disulfoton), 4-Chlorphonyl-methylcarbamat (Mephenate), O,O-Dlethyl-O-phenylphosphorotioat (Dietholate), 4-Carboxy-3,4-dihydro-2H-1-benzopyran-4-essigsäure (CL-304415, CAS-Regno: 31541-57-8), Cyanomethoxyimino(phenyl)acetonitril (Cyometrinil), 1,3-Dioxolan-2-ylmethoxyimino(phenyl)acetonitril (Oxabetrinil), 4'-Chlor-2,2,2-trifluoracetophenon-O-1,3-dioxolan-2-ylmethyloxim (Fluxofenim), 4,B-Dichlon2-phenylpyrimidin (Fenclorim), Banzyl-2-chlor-4-trifluormethyl-1,3-thiazol-5-carboxylat (Flurazole), 2-Dichlormethyl. 2-methyl-1,3-dioxolan (MG-191), N-(4-Methylphenyl)-N'-(1-methyl-1-phenylethyl)harnstoff (Dymron), (2,4-Dichlorphenoxy)essigsäure (2,4-D), (4-Chlorphenoxy)essigsäure, (R,S)-2-(4-Chlor-o-tolyloxy)propionsäure (Mecoprop), 4-(2,4-Dichlorphenoxy)buttersäure (2,4-DB), (4-Chlor-o-tolyloxy)essigsäure (MCPA), 4-(4-Chlor-o-tolyloxy)buttersäure, 4-(4-Chlorphenoxy)buttersäure, 3,6-Dichlor-2-methoxybenzoesäure (Dicamba), 1-(Ethoxycarbonyl)ethyl 3,6-dichlor-2-methoxybenzoat (Lactidichlor) sowie deren Salze und Ester, vorzugsweise (C₁-C₈);
c) N-Acylsulfonamide der Formel (S-V) und ihre Salze, 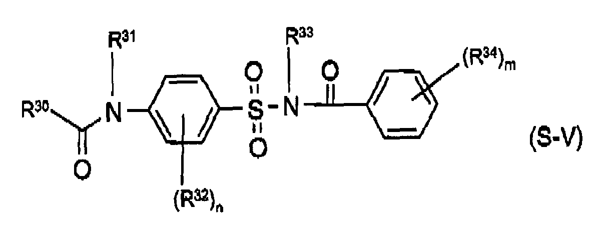 worin
   - R³⁰: Wasserstoff, einen Kohlenwasserstoffrest, einen Kohlenwasserstoffoxyrest, einen Kohlenwasserstoffthiorest oder einen Heterocyclylrest, der vorzugsweise über ein C-Atom gebunden ist, wobei jeder der letztgenannten 4 Reste unsubstituiert oder durch einen oder mehrere gleiche oder verschiedene Reste aus der Gruppe Halogen, Cyano, Nitro, Amino, Hydroxy, Carboxy, Formyl, Carbonamid, Sulfonamid und Reste der Formel -Z^{a}-R^{a} substituiert ist,
   wobei jeder Kohlenwasserstoffteil vorzugsweise 1 bis 20 C-Atome aufweist und ein C-haltiger Rest R³⁰ inklusive Substituenten vorzugsweise 1 bis 30 C-Atome aufweist;
   - R³¹: Wasserstoff oder (C₁-C₄)-Alkyl, vorzugsweise Wasserstoff, oder
   - R³⁰ und R³¹: zusammen mit der Gruppe der Formel -CO-N- den Rest eines 3- bis 8-gliedrigen gesättigten oder ungesättigten Rings;
   - R³²: gleich oder verschieden Halogen, Cyano, Nitro, Amino, Hydroxy, Carboxy, Formyl, CONH₂, SO₂NH₂ oder einen Rest der Formel -Z^{b}-R^{b};
   - R³³: Wasserstoff oder (C₁-C₄)-Alkyl, vorzugsweise H;
   - R³⁴: gleich oder verschieden Halogen, Cyano, Nitro, Amino, Hydroxy, Carboxy, CHO, CONH₂, SO₂NH₂ oder einen Rest der Formel -Z^{c}-R^{c};
   - R^{a}: einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Mono- und Di-[(C₁-C₄)-alkyl]-amino substituiert ist, oder einen Alkylrest, in dem mehrere, vorzugsweise 2 oder 3, nicht benachbarte CH₂-Gruppen jeweils durch ein Sauerstoffatom ersetzt sind;
   - R^{b},R^{c}: gleich oder verschieden einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Phosphoryl, Halogen-(C₁-C₄)-alkoxy, Mono- und Di-[(C₁-C₄)-alkyl]-amino substituiert ist, oder einen Alkylrest, in dem mehrere, vorzugsweise 2 oder 3, nicht benachbarte CH₂-Gruppen jeweils durch ein Sauerstoffatom ersetzt sind;
   - Z⁸: eine divalente Gruppe der Formel -O-, -S-, -CO-, -CS-, -CO-O-, -CO-S-, -O-CO-, -S-CO-, -SO-, -SO₂-, -NR*-, -CO-NR*-, -NR*-CO-, -SO₂-NR*- oder -NR*-SO₂-, wobei die rechts angegebene Bindung der jeweiligen divalenten Gruppe die Bindung zum Rest R^{a} ist und wobei die R* in den letztgenannten 5 Resten unabhängig voneinander jeweils H, (C₁-C₄)-Alkyl oder Halo-(C₁-C₄)-alkyl bedeuten;
   - Z^{b}, Z^{c},: unabhängig voneinander eine direkte Bindung oder eine divalente Gruppe der Formel -O-, -S-, -CO-, -CS-, -CO-O-, -CO-S-, -O-CO-, -S-CO-, -SO-, -SO₂-, -NR*-, -SO₂-NR*-, -NR*-SO₂-, -CO-NR*- oder-NR*-CO-, wobei die rechts angegebene Bindung der jeweiligen divalenten Gruppe die Bindung zum Rest R^{b} bzw. R^{c} Ist und wobei die R* in den letztgenannten 5 Resten unabhängig voneinander jeweils H, (C₁-C₄)-Alkyl oder Halo-(C₁-C₄)-alkyl bedeuten;
   - n: eine ganze Zahl von 0 bis 4, vorzugsweise 0,1 oder 2, Insbesondere 0 oder 1, und
   - m: eine ganze Zahl von 0 bis 5, vorzugsweise 0, 1, 2 oder 3, insbesondere 0, 1 oder 2; bedeuten;
   vorzugsweise Safener von Verbindungen der Formel (S-V), worin
   - R³⁰ = H₃C-O-CH₂-, R³¹ = R³³ = H, R³⁴ = 2-OMe ist (V-1),
   - R³⁰= H₃C-O-CH₂-, R³¹ = R³³ = H, R³⁴ = 2-OMe-5-Cl ist (V-2),
   - R³⁰= Cyclopropyl, R³¹= R³³= H, R³⁴ = 2-OMe ist (V-3),
   - R³⁰ = Cyclopropyl, R³¹= R³³= H, R³⁴ = 2-OMe-5-Cl ist (V-4),
   - R³⁰= Cyclopropyl, R³¹= R³³= H, R³⁴ = 2-Me ist (V-5),
   - R³⁰= tert. Butyl, R³¹= R³³ = H, R³⁴ = 2-OMe ist (V-6).
d) Acylsulfamoylbenzoesäureamide der allgemeinen Formel (S-VI), gegebenenfalls auch in Salzform, 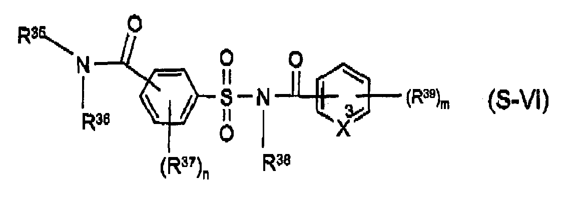 worin
   - X³: CH oder N;
   - R³⁵: Wasserstoff, Heterocyclyl oder einen Kohlenwasserstoffrest, wobei die beiden letztgenannten Reste gegebenenfalls durch einen oder mehrere, gleiche oder verschiedene Reste aus der Gruppe Halogen, Cyano, Nitro, Amino, Hydroxy, Carboxy, CHO, CONH₂, SO₂NH₂ und Z^{a}-R^{a} substituiert sind;
   - R³⁶: Wasserstoff, Hydroxy, (C₁-C₆)-Alkyl, (C₂-C₆)-Alkenyl, (C₂-C₆)-Alkinyl,- (C₁-C₆)-Alkoxy, (C₂-C₆)-Alkenyloxy, wobei die fünf letztgenannten Reste gegebenenfalls durch einen oder mehrere, gleiche oder verschiedene Reste aus der Gruppe Halogen, Hydroxy, (C₁-C₄)-Alkyl, (C₁-C₄)-Alkoxy und (C₁-C₄)-Alkylthio substituiert sind, oder
   - R³⁵ und R³⁶: zusammen mit dem sie tragenden Stickstoffatom einen 3- bis 8-gliedrlgen gesättigten oder ungesättigten Ring;
   - R³⁷: Halogen, Cyano, Nitro, Amino, Hydroxy, Carboxy, CHO, CONH₂, SO₂NH₂ oder Z^{b}-R^{b};
   - R³⁸: Wasserstoff, (C₁-C₄)-Alkyl, (C₂-C₄)-Alkenyl oder (C₂-C₄)-Alkinyl;
   - R³⁹: Halogen, Cyano, Nitro, Amino, Hydroxy, Carboxy, Phosphoryl, CHO, CONH₂, SO₂NH oder Z^{c}-R^{c};
   - R^{a}: einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Mono- und Di-[(C₁-C₄)-alkyl]-amino substituiert sind;
   - R^{b}, R^{c}: gleich oder verschieden einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Phosphoryl, (C₁-C₄)-Haloalkoxy, Mono- und Di-[(C₁-C₄)-alkyl]-amino substituiert sind;
   - Z^{a}: eine divalente Einheit aus der Gruppe O, S, CO, CS, C(O)O, C(O)S, SO, SO₂, NR^{d}, C(O)NR^{d} oder SO₂NR^{d};
   - Z^{b}, Z^{c}: gleich oder verschieden eine direkte Bindung oder eine divalente Einheit aus der Gruppe O, S, CO, CS, C(O)O, C(O)S, SO, SO₂, NR^{d}, SO₂NR^{d} oder C(O)NR^{d};
   - R^{d}: Wasserstoff, (C₁-C₄)-Alkyl oder (C₁-C₄)-Haloalkyl;
   - n: eine ganze Zahl von 0 bis 4, und
   - m: für den Fall, dass X für CH steht, eine ganze Zahl von 0 bis 5, und für den Fall, dass X für N steht, eine ganze Zahl von 0 bis 4 bedeuten;
   vorzugsweise Safener von Verbindungen der Formel (S-VI), In der
   - X³: CH;
   - R³⁵: Wasserstoff, (C₁-C₆)-Alkyl, (C₃-C₆)-Cycloalkyl, (C₂-C₆)-Alkenyl, (C₅-C₆)-Cycloalkenyl, Phenyl oder 3- bis 6-gliedriges Heterocyclyl mit bis zu drei Heteroatomen aus der Gruppe Stickstoff, Sauerstoff und Schwefel, wobei die sechs letztgenannten Reste gegebenenfalls durch einen oder mehrere, gleiche oder verschiedene Substituenten aus der Gruppe Halogen, (C₁-C₆)-Alkoxy, (C₁-C₆)-Haloalkoxy, (C₁-C₂)-Alkylsulfinyl, (C₁-C₂)-Alkylsulfonyl, (C₃-C₆)-Cycloalkyl, (C₁-C₄)-Alkoxycarbonyl, (C₁-C₄)-Alkylcarbonyl und Phenyl und im Falle cyclischer Reste auch (C₁-C₄)-Alkyl und (C₁-C₄)-Haloalkyl substituiert sind;
   - R³⁶: Wasserstoff, (C₁-C₆)-Alkyl, (C₂-C₆)-Alkenyl, (C₂-C₆)-Alkinyl, wobei die drei letztgenannten Reste gegebenenfalls durch einen oder mehrere, gleiche oder verschiedene Substituenten aus der Gruppe Halogen, Hydroxy, (C₁-C₄)-Alkyl, (C₁-C₄)-Alkoxy und (C₁-C₄)-Alkylthio substituiert sind;
   - R³⁷: Halogen, (C₁-C₄)-Haloalkyl, (C₁-C₄)-Haloalkoxy, Nitro, (C₁-C₄)-Alkyl, (C₁-C₄)-Alkoxy, (C₁-C₄)-Alkylsulfonyl, (C₁-C₄)-Alkoxycarbonyl oder (C₁-C₄)-Alkylcarbonyl;
   - R³⁸: Wasserstoff;
   - R³⁹: Halogen, Nitro, (C₁-C₄)-Alkyl, (C₁-C₄)-Haloalkyl, (C₁-C₄)-Haloalkoxy, (C₃-C₆)-Cycloalkyl, Phenyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl;
   - n: 0, 1 oder 2 und
   - m: 1 oder 2 bedeuten.
   Insbesondere Verbindungen vom Typ der Acylsulfamoylbenzoesäureamide der nachfolgenden Formel (S-VII), die z.B. bekannt sind aus WO-A-99/16744, 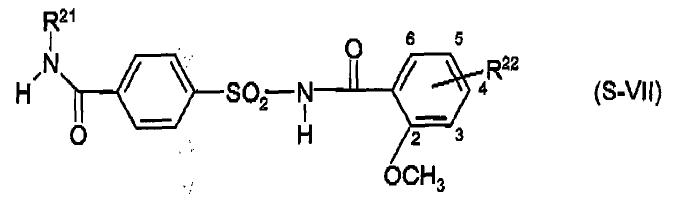 worin
   - R²¹ =: Cyclo-Propyl und R²² = H ist(S3-1 = 4-Cyclopropylaminocarbonyl-N-(2-methoxybenzoyl)benzolsulfonamid; Cyprosuifamide);
   - R²¹ =: Cyclo-Propyl und R²² = 5-Cl ist (S3-2),
   - R²¹ =: Ethyl und R²² = H ist (S3-3),
   - R²¹ =: iso-Propyl und R²² = 5-Cl ist (S3-4) und
   - R²¹ =: iso-Propyl und R²² = H ist (S3-5 = 4-iso-propylaminocarbonyl-N-(2-methoxybenzoyl)benzolsulfonamid);
e) Verbindungen vom Typ der N-Acylsulfamoylphenylharnstoffe der Formel (S-VIII), die z.B. bekannt sind aus der EP-A-365484, 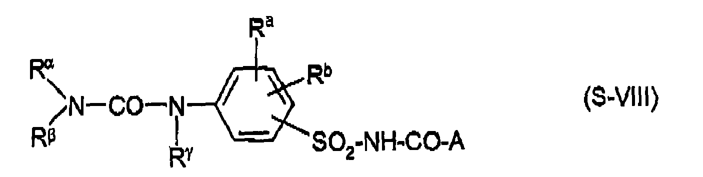 worin
   - A: für einen Rest aus der Gruppe 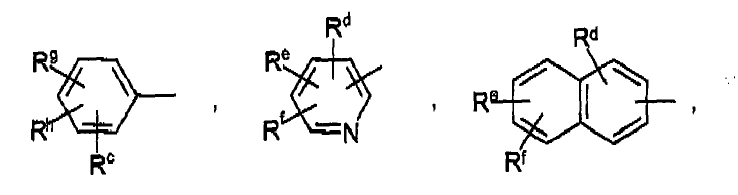 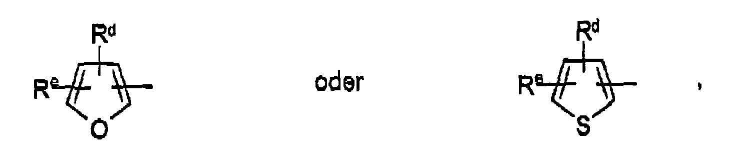
   - R^{α} und R^{β}: unabhängig voneinander für Wasserstoff, C₁-C₈-Alkyl, C₃-C₈-Cycloalkyl, C₃-C₆-Alkenyl, C₃-C₆-Alkinyl, 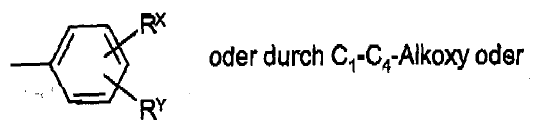 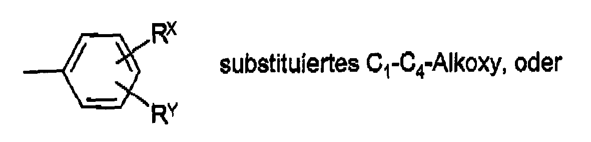
   - R^{α} und R^{β}: gemeinsam für eine C₄-C₆-Alkylenbrücke oder eine durch Sauerstoff, Schwefel, SO, SO₂, NH oder -N(C₁-C₄-Alkyl)- unterbrochene C₄-C₆-Alkylenbrücke,
   - R^{γ}: für Wasserstoff oder C₁-C₄-Alkyl,
   - R^{a} und R^{b}: unabhängig voneinander für Wasserstoff, Halogen, Cyan, Nitro, Trifluormethyl, C₁-C₄-Alkyl, C₁-C₄-Alkoxy, C₁-C₄-Alkylthio, C₁-C₄-Alkylsulfinyl, C₁-C₄-Alkylsulfonyl, -COOR^{j}, -CONR^{k}R^{m}, -CORⁿ, -SO₂NR^{k}R^{m} oder-OSO₂-C₁-C₄-Alkyl, oder R^{a} und R^{b} gemeinsam für eine C₃-C₄-Alkylenbrücke, die durch Halogen oder C₁-C₄-Alkyl substituiert sein kann, oder eine C₃-C₄-Alkenylenbrücke, die durch Halogen oder C₁-C₄-Alkyl substituiert sein kann, oder eine C₄-Alkadienylenbrücke, die durch Halogen oder C₁-C₄-Alkyl substituiert sein kann, und
   - R^{g} und: R^{h} unabhängig voneinander für Wasserstoff, Halogen, C₁-C₄-Alkyl, Trifluormethyl, Methoxy, Methylthio oder -COOR^{j} stehen, wobei
   - R^{c}: Wasserstoff, Halogen, C₁-C₄-Alkyl oder Methoxy,
   - R^{d}: Wasserstoff, Halogen, Nitro, C₁-C₄-Alkyl, C₁-C₄-Alkoxy, C₁-C₄-Alkylthio, C₁-C₄-Alkylsulfinyl, C₁-C₄-Alkylsulfonyl, -COOR^{j} oder -CONR^{k}R^{m},
   - R^{e}: Wasserstoff, Halogen, C₁-C₄-Alkyl, -COOR^{j}, Trifluormethyl oder Methoxy, oder R^{d} und R^{e} gemeinsam für eine C₃-C₄-Alkylenbrücke,
   - R^{f}: Wasserstoff, Halogen oder C₁-C₄-Alkyl,
   - R^{X} und: R^{Y} unabhängig voneinander Wasserstoff, Halogen, C₁-C₄-Alkyl, C₁-C₄-Alkoxy, C₁-C₄-Alkylthio, -COOR⁴, Trifluormethyl, Nitro oder Cyan,
   - R^{J}, R^{k}: und R^{m} unabhängig voneinander Wasserstoff oder C₁-C₄-Alkyl,
   - R^{k} und R^{m}: gemeinsam eine C₄-C₆-Alkylenbrücke oder eine durch Sauerstoff, NH oder -N(C₁-C₄-Alkyl)- unterbrochene C₄-C₆-Alkylenbrücke, und
   - Rⁿ: C₁-C₄-Alkyl, Phenyl oder durch Halogen, C₁-C₄-Alkyl, Methoxy, Nitro oder Trifluormethyl substituiertes Phenyl bedeuten;
   vorzugsweise Safener der Formel (S-VIII) sind
   1-[4-(N-2-Methoxybenzoylsulfamoyl)phenyl]-3-methylharnstoff,
   1-[4-(N-2-Methoxybenzoylsulfamoyl)phenyl]-3,3dimethylharnstoff,
   1-[4-(N-4,5-Dimethylbenzoylsulfamoyl)phenyl]-3-methylharnstoff,
   1-[4-(N-Naphthoylsulfamoyl)phenyl]-3,3-dimethylharnstoff,
   einschließlich der Stereoisomeren und der in der Landwirtschaft gebräuchlichen Salze.

Sofern es im Einzelnen nicht anders definiert wird, gelten für die Reste in den Formeln zu (S-II) bis (S-VIII) im Allgemeinen die folgenden Definitionen. Die Reste Alkyl, Alkoxy, Haloalkyl, Haloalkoxy, Alkylamino und Alkylthio sowie die entsprechenden ungesättigten und/oder substituierten Reste können im Kohlenstoffgerüst jeweils geradkettig oder verzweigt sein.

Alkylreste, auch in den zusammengesetzten Bedeutungen wie Alkoxy, Haloalkyl usw. haben vorzugsweise 1 bis 4 C-Atome und, bedeuten z.B. Methyl, Ethyl, n- oder i-Propyl, n-, i-, t- oder 2-Butyl. Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl. Alkinyl bedeutet z.B. Propargyl, But-2-in-1-yl, But-3-in-1-yl, 1-Methyl-but-3-in-1-yl. "(C₁-C₄)-Alkyl" ist die Kurzschreibweise für Alkyl mit 1 bis 4 C-Atomen; entsprechendes gilt für andere allgemeine Restedefinitionen mit in Klammem angegebenen Bereichen für die mögliche Anzahl von C-Atomen.

Cycloalkyl bedeutet bevorzugt einen cyclischen Alkylrest mit 3 bis 8, vorzugsweise 3 bis 7, besonders bevorzugt 3 bis 6 C-Atomen, beispielsweise Cyclopropyl, Cyclobutyl, Cyclopentyl und Cyclohexyl. Cycloalkenyl und Cycloalkinyl bezeichnen entsprechende ungesättigte Verbindungen.

Halogen bedeutet Fluor, Chlor, Brom oder lod. Haloalkyl, Haloalkenyl und Haloalkinyl bedeuten durch Halogen, vorzugsweise durch Fluor, Chlor und/oder Brom, insbesondere durch Fluor oder Chlor, teilweise oder vollständig substituiertes Alkyl, Alkenyl oder Alkinyl, z.B. OF₃, CHF₂, CH₂F, CF₂CF₃, CH₂CHFCl, CCl₃, CHCl₂, CH₂CH₂Cl, Haloalkoxy ist z.B. OCF₃, OCHF₂, OCH₂F, OCF₂CF₃, OCH₂CF₃ und OCH₂CH₂Cl. Entsprechendes gilt für sonstige Halogen substituierte Reste.

Ein Kohlenwasserstoffrest kann ein aromatischer oder ein allphatischer Kohlenwasserstoffrest sein, wobei ein aliphatischer Kohlenwasserstoffrest im allgemeinen ein geradkettiger oder verzweigter gesättigter oder ungesättigter Kohlenwasserstoffrest ist, vorzugsweise mit 1 bis 18, besonders bevorzugt 1 bis 12 C-Atomen, z.B. Alkyl, Alkenyl oder Alkinyl.

Vorzugsweise bedeutet aliphatischer Kohlenwasserstoffrest Alkyl, Alkenyl oder Alkinyl mit bis zu 12 C-Atomen; entsprechendes gilt für einen aliphatischen Kohlenwasserstoffrest in einem Kohlenwasserstoffoxyrest.

Aryl ist im allgemeinen ein mono-, bi- oder polycyclisches aromatisches System mit vorzugsweise 6-20 C-Atomen, bevorzugt 6 bis 14 C-Atomen, besonders bevorzugt 6 bis 10 C-Atomen, z.B. Phenyl, Naphthyl, Tetrahydronaphthyl, Indenyl, Indanyl, Pantalenyl und Fluorenyl, besonders bevorzugt Phenyl.

Heterocyclischer Ring, heterocyclischer Rest oder Heterocyclyl bedeutet ein mono-, bi- oder polycyclisches Ringsystem, das gesättigt, ungesättigt und/oder aromatisch ist und eine oder mehrere, vorzugsweise 1 bis 4, Heteroatome, vorzugsweise aus der Gruppe N, S und O, enthält.

Bevorzugt sind gesättigte Heterocyclen mit 3 bis 7 Ringatomen und einem oder zwei Heteroatomen aus der Gruppe N, O und S, wobei die Chalcogene nicht benachbart sind. Besonders bevorzugt sind monocyclische Ringe mit 3 bis 7 Ringatomen und einem Heteroatom aus der Gruppe N, O und S, sowie Morpholin, Dioxolan, Piperazin, Imidazolin und Oxazolidin. Ganz besonders bevorzugte gesättigte Heterocyclen sind Oxiran, Pyrrolidon, Morpholin und Tetrahydrofuran.

Bevorzugt sind auch teilweise ungesättigte Heterocyclen mit 5 bis 7 Ringatomen und einem oder zwei Heteroatomen aus der Gruppe N, O und S. Besonders bevorzugt sind teilweise ungesättigte Heterocyclen mit 5 bis 6 Ringatomen und einem Heteroatom aus der Gruppe N, O und S. Ganz besonders bevorzugte teilweise ungesättigte Heterocyclen sind Pyrazolin, Imidazolin und Isoxazolin.

Ebenso bevorzugt ist Heteroaryl, z.B. mono- oder bicyclische aromatische Heterocyclen mit 5 bis 6 Ringatomen, die ein bis vier Heteroatome aus der Gruppe N, O, S enthalten, wobei die Chalcogene nicht benachbart sind. Besonders bevorzugt sind monocyclische aromatische Heterocyclen mit 5 bis 6 Ringatomen, die ein Heteroatom aus der Gruppe, N, O und S enthalten, sowie Pyrimidin, Pyrazin, Pyridazin, Oxazol, Thiazol, Thiadiazol, Oxadiazol, Pyrazol, Triazol und Isoxazol. Ganz besonders bevorzugt sind Pyrazol, Thiazol, Triazol und Furan.

Substituierte Reste, wie substituierte Kohlenwasserstoffreste, z.B. substituiertes Alkyl, Alkenyl, Alkinyl, Aryl wie Phenyl und Arylalkyl wie Benzyl, oder substituiertes Heterocyclyl, bedeuten einen vom unsubstituierten Grundkörper abgeleiteten substituierten Rest, wobei die Substituenten vorzugsweise einen oder mehrere, vorzugsweise 1, 2 oder 3, im Falle von Cl und F auch bis zur maximal möglichen Anzahl, Substituenten aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino wie Acylamino, Mono- und Dialkylamino und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Substituenten entsprechende ungesättigte aliphatische Substituenten, vorzugsweise Alkenyl, Alkinyl, Alkenyloxy, Alkinyloxy, bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor oder Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Mono- oder disubstituiertes Amino bedeutet einen chemisch stabilen Rest aus der Gruppe der substituierten Aminoreste, welche beispielsweise durch einen oder zwei gleiche oder verschiedene Reste aus der Gruppe Alkyl, Alkoxy, Acyl und Aryl N-substituiert sind; vorzugsweise Monoalkylamino, Dialkylamino, Acylamino, Arylamino, N-Alkyl-N-Arylamino sowie N-Heterocyclen. Dabei sind Alkylreste mit 1 bis 4 C-Atomen bevorzugt. Aryl Ist dabei vorzugsweise Phenyl. Substituiertes Aryl ist dabei vorzugsweise substituiertes Phenyl. Für Acyl gilt dabei die weiter unten genannte Definition, vorzugsweise (C₁-C₄)Alkanoyl. Entsprechendes gilt für substituiertes Hydroxylamino oder Hydrazino.

Gegebenenfalls substituiertes Phenyl ist vorzugsweise Phenyl, das unsubstituiert oder ein- oder mehrfach, vorzugsweise bis zu dreifach, bei Halogen wie Cl und F auch bis zu fünffach, durch gleiche oder verschiedene Reste aus der Gruppe Halogen, (C₁-C₄)Alkyl, (C₁-C₄)Alkoxy, (C₁-C₄)Haloalkyl, (C₁-C₄)Haloalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, mund p-Methoxyphenyl.

Ein Acylrest bedeutet den Rest einer organischen Säure mit vorzugsweise bis zu 6 C-Atomen, z.B. den Rest einer Carbonsäure und Reste davon abgeleiteter Säuren wie der Thiocarbonsäure, gegebenenfalls N-substituierter Iminocarbonsäuren, oder der Rest von Kohlensäuremonoestern, gegebenenfalls N-substituierter Carbaminsäuren, Sulfonsäuren, Sulfinsäuren, Phosphonsäuren, Phosphinsäuren. Acyl bedeutet beispielsweise Formyl, Alkylcarbonyl, wie (C₁-C₄-Alkyl)-carbonyl, Phenylcarbonyl, wobei der Phenylring substituiert sein kann, z.B. wie oben für Phenyl angegeben, oder Alkyloxycarbonyl, Phenyloxycarbonyl, Benzyloxycarbonyl, Alkylsulfonyl, Alkylsulfinyl oder N-Alkyl-1-iminoalkyl.

Von den Formeln (S-II) bis (S-VIII) umfasst sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Die Verbindungen der Formel (S-II) sind z.B. aus EP-A-0333139 (ZA-89/1960), EP-A-0269806 (US 4,891,057), EP-A-0346620 (AU-A-89/34951), EP-A-0174562, EP-A-0346620 (WO-A-91/08202), WO-A-91/07874 oder WO-A-95/07897 (ZA 94/7120) und der dort zitierten Literatur bekannt oder können nach oder analog den dort beschriebenen Verfahren hergestellt werden. Die Verbindungen der Formel (S-III) sind aus EP-A-0086750, EP-A-094349 (US 4,902,340), EP-A-0191736 (US 4,881,986) und EP-A-0492366 und dort zitierter Literatur bekannt oder können nach oder analog den dort beschriebenen Verfahren hergestellt werden. Einige Verbindungen sind ferner in EP-A-0582198 und WO A-02134048 beschrieben. Die Verbindungen der Formel (S-IV) sind aus zahlreichen Patentanmeldungen bekannt, beispielsweise US 4,021,224 und US 4,021,229. Verbindungen der Untergruppe b) sind weiterhin aus CN-A-87/102789, EP-A-365484 sowie aus "The Pesticide Manual", 11. bis 13. Auflage, British Crop Protection Council and the Royal Society of Chemistry (1997), bekannt. Die Verbindungen der Untergruppe c) sind in der WO-A-97/45016, die der Untergruppe d) in der WO-A-99/16744 (insbesondere in EP-A-365484) beschrieben. Die zitierten Schriften enthalten ausführliche Angaben zu Herstellungsverfahren und Ausgangsmaterialien und nennen bevorzugte Verbindungen. Auf diese Schriften wird ausdrücklich Bezug genommen, sie gelten durch Zitat als Bestandteil dieser Beschreibung.

Die Safener der vorstehenden Gruppen a) bis e) reduzieren oder unterbinden phytotoxische Effekte, die beim Einsatz der herbiziden Mittel gemäß der Erfindung in Nutzpflanzenkulturen auftreten können, ohne die Wirksamkeit der Herbizide gegen Schadpflanzen zu beeinträchtigen. Hierdurch kann das Einsatzgebiet der Herbizide erheblich erweitert werden und insbesondere ist durch die Verwendung von Safenern der Einsatz von Herbiziden, die bislang nur beschränkt oder mit nicht ausreichendem Erfolg eingesetzt werden konnten, d.h. von Kombinationen, die ohne Safener in niedrigen Doslerungen mit wenig Breitenwirkung zu nicht ausreichender Kontrolle der Schadpflanzen führten.

Besonders bevorzugt sind als Safener in den erfindungsgemäßen Formulierungen unter anderem: 4-Dichloracetyl-1-oxa-4-aza-spiro[4,5]-decan (AD-67), 1-Dichloracetyl-hexahydro-3,3,8a-trimethylpyrrolo[1,2-a]-pyrimidin-6(2H)-on (Dicyclonon, BAS-145138), 4-Dichloracetyl-3,4-dihydro-3-methyl-2H-1,4-benzoxazin (Benoxacor), Cloquintocet, 5-Chlor-chinolin-8-oxy-essigsäure-(1-methyl-hexylester) (Cloquintocet-mexyl), α-(Cyanomethoxyimino)-phenylacetonitril (Cyometrinil), 2,2-Dichlor-N-(2-oxo-2-(2-propenylamino)-ethyl)-N-(2-propenyl)-acetamid (DKA-24), 2,2-Dichlor-N,N-di-2-propenyl-acetamid (Dichlormid), N-(4-Methyl-phenyl)-N'-(1-methyl-1-phenyl-ethyl)-hamstoff (Dymron), 4,6-Dichlor-2-phenyl-pyrimidin (Fenclorim), 1-(2,4-Dichlor-phenyl)-5-trichlormethyl-1H-1,2,4-triazol-3-carbonsäure-ethylester (Fenchlorazol-ethyl), 2-Chlor-4-trifluormethyl-thiazol-5-carbonsäure-phenylmethylester (Flurazole), 4-Chlor-N-(1,3-dioxolan-2-yl-methoxy)-α-trifluoracetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (lsoxadifen-ethyl), Diethyl-1-(2,4-dichlorphenyl)-4,5-dihydro-5-methyl-1H-pyrazol-3,5-dicarboxylat (Mefenpyr-diethyl), 2-Dichlormethyl-2-methyl-1,3-dioxolan (MG-191), 1,8-Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2-dimethyl-oxazolidin (R-28725), 3-Dichloracetyl-2,2,5-trimethyl-oxazolidin (R-29148), 1-(2-Chlor-phenyl)-5-phenyl-1H-pyrazol-3-carbonsäure-methylester, 4-Cyclopropylaminocarbonyl-N-(2-methoxybenzoyl)benzolsulfonamid (Cyprosulfamide), 4-iso-propylaminocarbonyl-N-(2-methoxybenzoyl)benzolsulfonamid und N-(2-Methoxy-benzoyl)-4-[(methylamino-carbonyl)-amino]-benzolsulfonamid,

Ganz besonders bevorzugt sind die Safenern Mefenpyr-diethyl, Cloquintocet-mexyl, Isoxadifen-ethyl, 4-Cyclopropylaminocarbonyl-N-(2-methoxybenzoyl)benzolsulfonamid (Cyprosulfamide), 4-iso-propylaminocarbonyl-N-(2-methoxybenzoyl)benzolsulfonamid oder Fenchlorazol-ethyl; insbesondere ganz besonders bevorzugt sind Mefenpyr-diethyl, Cloqulntocet-mexyl oder Isoxadifen-ethyl.

Bevorzugte Herbizid-Safener-Mischungen sind Kombinationen der folgenden Verbindungen miteinander:
a) Verbindungen, die als ACCase-Inhibitoren wirksam sind, wie Alloxydim, Butroxydim, Clethodim, Clodinafop-propargyl, Cycloxydim, Cyhalofop-butyl, Diclofop-methyl, Fenoxaprop, Fenoxaprop-ethyl, Fenoxaprop-P, Fenoxaprop-P-ethyl, Fluazifop, Fluazifop-P-butyl, Fluazifop-butyl, Haloxyfop, Haloxyfop-P, Haloxyfop-etotyl, Haloxyfop-P-methyl, Metamifop, Profoxydim, Propaquizafop, Quizalofop-P-tefuryl, Quizalofop-P-ethyl, Sethoxydim, Tepraloxydim, Tralkoxydim und Isoxapyrifop,
b) Verbindungen, die als *p*-Hydroxyphenyl pyruvate dioxygenase (HPPD)-Inhibitoren wirksam sind, wie Benzobicyclon, Benzofenap, Isoxaflutole und dessen Diketonitrile, Mesotrione, Pyrazolynate, Pyrazoxyfen, Sulcotrione und Isoxachlortole,
c) Verbindungen verschiedener Wirkstoffgruppen, wie Atrazin, Acetochlor, Aclonifen, Alachlor, Amidochlor, Amidosulfuron, Azimsulfuron, Bentazon, Bensulfuron(-methyl), Bromoxynil(-octanoat/-heptanoat), Butachlor, Bispyribac, Chlorsulfuron, Chlorimuron, Clomazone, Clopyralid, Cinosulfuron, Cyclosulfamuron, 2,4-D-Ester, 2,4-DB-Ester, 2,4-DP-Ester, CMPP-Ester, MCPA-Ester, MCPB, EPTC, Desmedipham, Diflufenican, Dicamba, Ethoxysulfuron, Ethofumesat, Flazasulfuron, Florasulam, Flucarbazone, Flumetsulam, Flufenacet, Fluoroglykofen, Fluroxypyr, Flupyrsulfuron, Foramsulfuron, Flumioxazin, Flumiclorac, Fomesafen, Glufosinate, Glyphosate, Imazapyr, Imazosulfuron, iodosulfuron, Iodosulfuron-methyl, Ioxynil(-octanoat), Lactofen, Halosulfuron, Imazamox, Imazapic, Imazapyr, Imazethapyr, Imazaquin, Metosulam, Mesosulfuron(-methyl), (S-)Metolachlor, Metsulfuron-methyl, Metamitron, Nicosulfuron, Oxyfluorfen, Pendimethalin, Phenmedipham, Picloram, Pinoxaden, Primisulfuron-methyl, Prosulfuron, Propanil, Propoxycarbazone, Pyrazosulfuron(-methyl), Rimsulfuron, Sulfentrazone, Sulfosulfuron, Sulfometuron, Terbuthylazin, Thifensulfuron, Triasulfuron, Tribenuron, Triclopyr, Triflusulfuron-methyl, Trifluralin, Tritosulfuron, Topramezone, Oxazinon, Oxadiargyl, Metribuzin, und deren Salze, z.B. die Natriumsalze.
d) Verbindungen, die als Safener wirksam sind, wie AD 67 (4-(dichloroacetyl)-1-oxa-4-azaspiro[4.5]decane), Benoxacor, CL 304,415 (4-carboxymethylchroman-4-carboxylic acid), Cloquintocet, Cloquintocet-mexyl, Cyprosulfamide, Dichlormid, Dicyclonon, DKA-24 (N1 ,N2-diallyl-N2-dichloroacetylglycinamide), Fenchlorazole, Fenchlorazole-ethyl, Fenclorim, Flurazole, Fluxofenim, Furilazole, Isoxadifen-ethyl, Mefenpyr-diethyl, MG 191 (2-dichloromethyl-2-methyl-1,3-dioxolane), Naphthalsäureanhydrid (naphthalene-1,8-dicarboxylic anhydride), Oxabetrinil and TI-35 (1-dichloroacetylazepane).

In einer weiteren Ausführungsform können z.B. verschiedene Herbizide miteinander kombiniert werden, z.B. Fenoxaprop-p-ethyl + loxynil-octanoat, Diclofop-methyl + Bramoxynil-octanoat, CMPP + Bromoxynil-octanoat, MCPA + loxynil-octanoat, Bromoxynil-octanoat + Bromoxynil-heptanoat, Bromoxynil-octanoat + Bromoxynil-heptanoat + MCPA, Bromoxynil-octanoat + Bromoxynil-heptanoat+ 2,4-D, Phenmedipham + Desmedipham, Phenmedipham + Desmedipham + Ethofumesate, Metamitron + Ethofumesate, Phenmedipham + Ethofumesate + Metamitron, Fenoxaprop-p-ethyl + Iodosulfuron-methyl-natrium, Fenoxaprop-p-ethyl + Diclofop-methyl, Fenoxaprop-p-ethyl + Iodosulfuron-methyl-natrium + Diclofop-methyl.

Als besonders bevorzugt sind die Kombinationen aus: Foramsulfuron + Iodosulfuron-methyl-sodium + Isoxadifen-ethyl, Iodosulfuron-methyl-sodium +Isoxadifen-ethyl, Foramsulfuron + Isoxadifen-ethyl, Fenoxaprop-P-ethyl + Ethoxysulfuron + Isoxadifen-ethyl, Ethoxysulfuron + Isoxadifen-ethyl, Fenoxaprop-P-ethyl + Isoxadifen-ethyl, Iodosulfuron-methyl-sodium + Mesosulfuron-methyl + Mefenpyr-diethyl, Mesosulfuron-methyl + Mefenpyr-diethyl, lodosulfuron-methyl-sodium + Mefenpyr-diethyl, Fenoxaprop-P-ethyl + Mefenpyr-diethyl, Fenoxaprop-P-ethyl + Diclofop-methyl + Mefenpyr-diethyl, Diclofop-methyl + Mefenpyr-diethyl, Diclofop-methyl + Sethoxydim + Mefenpyr-diethyl, Sethoxydim + Mefenpyr-diethyl, Fenoxaprop-P-ethyl + Isoproturon + Mefenpyr-diethyl, isoproturon + Mefenpyr-diethyl, Clodinafop-propargyl + Cloquintocet-mexyl, Fenoxaprop-ethyl + Fenchlorazole-ethyl, Fenoxaprop-P-ethyl + Fenchlorazole-ethyl, Flucarbazone + Cyprosulfamide, Foramsulfuron + Cyprosulfamide, lodosulfuron(-methyl) + Cyprosulfamide, Metosulam + Cyprosulfamide, Metsulfuron(methyl) + Cyprosulfamide, Nicosulfuron + Cyprosulfamide, Primisulfuron(methyl) + Cyprosulfamide, Prosulfuron + Cyprosulfamide + Cyprosulfamide, Thifensulfuron + Cyprosulfamide, Tribenuron + Cyprosulfamide, Cloransulam-methyl + Cyprosulfamide, Chlorimuron + Cyprosulfamide, Ethoxysulfuron + Cyprosulfamide, Flazasulfuron + Cyprosulfamide, Florasulam + Cyprosulfamide, Flumetsulam + Cyprosulfamide, Halosulfuron + Cyprosulfamide, Imazamox + Cyprosulfamide, Imazapic + Cyprosulfamide, Imazapyr + Cyprosulfamide, Imazethapyr + Cyprosulfamide, Mesosulfuron + Cyprosulfamide, Propoxycarbazone + Cyprosulfamide, Sulfosulfuron + Cyprosulfamide, Amidosulfuron + Cyprosulfamide, Chlorsulfuron + Cyprosulfamide, Imazaquin + Cyprosulfamide, Triasulfuron + Cyprosulfamide, Sulfometuron + Cyprosulfamide, Cyclosulfamuron + Cyprosulfamide, Flupyrsulfuron + Cyprosulfamide, Pyrazosulfuron+ Cyprosulfamide, Azimsulfuron + Cyprosulfamide, Bensulfuron + Cyprosulfamide, Bispyribac + Cyprosulfamide, Rimsulfuron + Cyprosulfamide, Tritosulfuron + Cyprosulfamide, Sulcotrione + Cyprosulfamide, Clomazone + Cyprosulfamide, Mesotrione + Cyprosulfamide, Topramezone + Cyprosulfamide, Metribuzin + Cyprosulfamide, Bentazon + Cyprosulfamide, Bromoxynil + Cyprosulfamide, Propanil + Cyprosulfamide, Atrazin + Cyprosulfamide, Terbuthylazin + Cyprosulfamide, EPTC + Cyprosulfamide, Tepraloxydim + Cyprosulfamide, Clethodim + Cyprosulfamide, Alloyxdim + Cyprosulfamlde, Sethoxydim + Cyprosulfamide, Tralkoxydim + Cyprosulfamide, Clodinafop-propargyl + Cyprosulfamide, Cyhalofop-butyl + Cyprosulfamide, Dielofop-methyl + Cyprosulfamide, Fenoxaprop-P-ethyl + Cyprosulfamide, Fluazifop-P-butyl + Cyprosulfamide, Haloxyfop-methyl + Cyprosulfamide, Haloxyfop-etotyl + Cyprosulfamide, Haloxyfop-R-methyl + Cyprosulfamide, Haloxyfop-ethoxyethyl + Cyprosulfamide, Propaquizafop + Cyprosulfamide, Quizalofop-P-tefuryl + Cyprosulfamide, Quizalofop-P-ethyl + Cyprosulfamide, Acetochlor + Cyprosulfamide, S-Metolachlor + Cyprosulfamide, Flumioxazin + Cyprosulfamide, Flumiclorac + Cyprosulfamide, Fomesafen + Cyprosulfamide, Sulfentrazone + Cyprosulfamide, Dicamba + Cyprosulfamide, MCPA + Cyprosulfamide, MCPB + Cyprosulfamide, 2,4-D + Cyprosulfamide, Clopyralid + Cyprosulfamide, Fluroxypyr + Cyprosulfamide, Picloram + Cyprosulfamide, Triclopyr + Cyprosulfamide, Glufosinate + Cyprosulfamide, Glyphosate + Cyprosulfamide und Pendimethalin + Cyprosulfamide.

Das Gewichtsverhältnis Safener : Herbizid kann innerhalb weiter Grenzen variieren und liegt vorzugsweise im Bereich von 1 : 100 bis 100 : 1, insbesondere von 1 : 100 bis 50 : 1, ganz besonders bevorzugt 1 : 10 bis 10 : 1. Die jeweils optimalen Mengen an Herbizid(en) und Safener(n) sind üblicherweise vom Typ des Herbizids und/oder vom verwendeten Safener sowie von der Art des zu behandelnden Pflanzenbestandes abhängig.

Fungizide

Die agrochemischen Wirkstoffe können auch Fungizide sein, beispielsweise
Inhibitoren der Nucleinsäure Synthese, insbesondere
   Benalaxyl, Benalaxyl-M, Bupirimat, Chiralaxyl, Clozylacon, Dimethirimol, Ethirimol, Furalaxyl, Hymexazol, Metalaxyl, Metalaxyl-M, Ofurace, Oxadixyl, Oxolinsäure
Inhibitoren der Mitose und Zellteilung, insbesondere
   Benomyl, Carbendazim, Diethofencarb, Fuberidazole, Pencycuron, Thiabendazol, Thiophanat-methyl, Zoxamid
Inhibitoren der Atmungskette Komplex I, Insbesondere
   Diflumetorim
Inhibitoren der Atmungskette Komplex II, insbesondere
   Boscalid, Carboxin, Fenfuram, Flutolanil, Furametpyr, Mepronil, Oxycarboxin, Penthiopyrad, Thifluzamid
Inhibitoren der Atmungskette Komplex III, insbesondere
   Azoxystrobin, Cyazofamid, Dimoxystrobin, Enestrobin, Famoxadon, Fenamidon, Fluoxastrobin, Kresoximmethyl, Metominostrobin, Orysastrobin, Pyraclostrobin, Picoxystrobin, Trifloxystrobin
Entkoppler, insbesondere
   Dinocap, Fluazinam
Inhibitoren der ATP Produktion, insbesondere
   Fentinacetat, Fentinchlorid, Fentinhydroxid, Silthiofam
Inhibitoren der Aminosäure- und Proteinbiosynthese, insbesondere
   Andoprim, Blasticidin-S, Cyprodinil, Kasugamycin, Kasugamycinhydrochlorid Hydrat, Mepanipyrim; Pyrimethanil
Inhibitoren der Signal-Transduktion, insbesondere
   Fenpiclonil, Fludioxonil, Quinoxyfen
Inhibitoren der Fett- und Membran Synthese, insbesondere
   Chlozolinat, Iprodion, Procymidon, Vinclozolin
   Ampropylfos, Kalium-Ampropylfos, Edifenphos, Iprobenfos (IBP), Isoprothlolan,
   Pyrazophos
   Tolclofos-methyl, Biphenyl
   lodocarb, Propamocarb, Propamocarb hydrochlorid
Inhibitoren der Ergosterol Biosynthese, insbesondere
   Fenhexamid,
   Azaconazol, Bitertanol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-cis, Hexaconazol, Imibenconazol, Ipconazol, Metconazol, Myclobutanil, Paclobutrazol, Penconazol, Propiconaxol, Prothioconazol, Simeconazol, Tebuconazol, Tetraconazol, Triadimefon, Triadimenol, Triticonazol, Uniconazol, Voriconazol, Imazalil, Imazalilsulfat, Oxpoconazol, Fenarimol, Flurprimidol, Nuarimol, Pyrifenox, Triforin, Pefurazoat, Prochloraz, Triflumizol, Viniconazol, Aldimorph, Dodemorph, Dodemorphacetat, Fenpropimorph, Tridemorph, Fenpropidin, Spiroxamin,
   Naftifin, Pyributicarb, Terbinafin
Inhibitoren der Zellwand Synthese, insbesondere
   Benthiavalicarb, Bialaphos, Dimethomorph, Flumorph, Iprovalicarb, Polyoxins, Polyoxorim, Validamycin A
Inhibitoren der Melanin Biosynthese, insbesondere
   Capropamid, Diclocymet, Fenoxanil, Phtalid, Pyroquilon, Tricyclazol
Resistenzinduktoren, insbesondere
   Acibenzolar-S-methyl, Probenazol, Tiadinil
Multisite, insbesondere
   Captafol, Captan, Chlorothalonil, Kupfersalze wie: Kupferhydroxid, Kupfemaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Folpet, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefalpräparate enthaltend Calciumpolysulphid, Thiram, Tolylfluanid, Zineb, Ziram
Fungizide mit unbekannten Mechanismus, insbesondere
   Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Didoran, Difenzoquat, Difenzoquat Methylsulphat, Diphenylamin, Ethaboxam, Ferimzon, flumetover, Flusulfamid, Fluopicolid, Fluoroimid, Hexachlorobenzol, 8-Hydroxychinolinsulfat, lrumamycin, Methasulphocarb, Metrafenon, Methyl Isothiocyanat, Mildlomycin, Natamycin, Nickel dimethyldithiocarbamat, Nitrothal-isopropyl, Octhilinon, Oxamocarb, Oxyfenthiin, Pentachlorophenol und Salze, 2-Phenylphenol und Salze, Piperalin, Propanosin-Natrium, Proquinazid, Pyrrolnitrin, Quintozen, Tecloftalam, Tecnazen, Triazoxid, Trichlamid, Zarilamid und 2,3,6,6-Tetrachlor-4-(methylsulfonyl)-pyridin, N-(4-Chlor-2-nitrophenyl)-N-ethyl-4-methyl-benzenesulfonamid, 2-Amino-4-methyl-N-phenyl-5-thiazolecarboxamid, 2-Chlor-N-(2,3-dihydro-1,1,3-trimethyl-1H-inden-4-yl)-3-pyridincarboxamid, 3-[5-(4-Chlorphenyl)-2,3-dimethylisoxazolidin-3-yl]pyridin, cis-1-(4-Chlorphenyl)-2-(1H-1,2,4-triazol-1-yl)-cycloheptanol, 2,4-Dihydro-5-methoxy-2-methyl-4-[[[[1-[3-(trifluoromethyl)-phenyl]-ethyliden]-amino]-oxy]-methyl]-phenyl]-3H-1,2,3-triazol-3-on (185336-79-2), Methyl 1-(2,3-dihydro-2,2-dimethyl-1H-inden-1-yl)-1H imidazole-5-carboxylat, 3,4,5-Trichlor-2,6-pyridindicarbonitril, Methyl 2-[[[cyclopropyl[(4-methoxyphenyl) imino]methyl]thio]methyl]-alpha.-(methoxymethylen)- benzacetat, 4-Chlor-alpha-propinyloxy-N-[2-[3-methoxy-4-(2-propinyloxy)phenyl]ethyl]-benzacetamide, (2S)-N-[2-[4-[[3-(4-chlorophenyl)-2-propinyl]oxy]-3-methoxyphenyl]ethyl]-3-methyl-2-[(methylsulfonyl)amino]-butanamid, 5-Chlor-7-(4-methylpiperidin-1-yl)-6-(2,4,6-trifluorophenyl)[1,2,4]triazolo[1,5-a]pyrimidin, 5-Chlor-6-(2,4,6-trifluorophenyl)-N-[(1R)-1,2,2-trimethylpropyl][1,2,4]triazolo[1,5-a]pyrimidin-7-amin, 5-Chlor-N-[(1R)-1,2-dimethylpropyl]-6-(2,4,6-trifluorophenyl) [1,2,4]triazolo[1,5-a]pyrimidin-7-amine, N-[1-(5-Brom-3-chloropyridin-2-yl)ethyl]-2,4-dichloronicotinamid, N-(5-Brom-3-chlorpyridin-2-yl)methyl-2,4-dichlomicotinamid, 2-Butoxy-6-iod-3-propyl-benzopyranon-4-on, N-{(Z)-[(cyclopropylmethoxy) imino][6-(difluormethoxy)-2,3-difluorphenyl]methyl}-2-benzacetamid, N-(3-Ethyl-3,5,5-trimethyl-cyclohexyl)-3-formylamino-2-hydroxy-benzamid, 2-[[[[1-[3(1Fluor-2-phenylethyl)oxy] phenyl] ethyliden]amino]oxy]methyl]-alpha-(methoxyimino)-N-methyl-alphaE-benzacetamid, N-{2-[3-Chlor-5-(trifluormethyl)pyridin-2-yl]ethyl}-2-(trifluoromethyl)benzamid, N-(3',4'-dichlor-5-fluorbiphenyl-2-yl)-3-(difluormethyl)-1-methyl-1H-pyrazol-4-carboxamid, N-(6-Methoxy-3-pyridinyl)-cyclopropan carboxamid, 1-[(4-Methoxyphenoxy)methyl]-2,2-dimethylpropyl-1H-imidazol-1- carbonsäure, O-[1-[(4-Methoxyphenoxy)methyl]-2,2-dimethylpropyl]-1H-imidazol-1- carbothioic acid, 2-(2-{[6-(3-Chlor-2-methylphenoxy)-5-fluorpyrimidin-4-yl]oxy}phenyl)-2-(methoxyimino)-N-methylacetamid

Die agrochemischen Wirkstoffe können auch Bakterizide sein, beispielsweise Bronopol, Dichlorophen, Nitrapyrin, Nickel-Dimethyldithlocarbamat, Kasugamycin, Octhilinon, Furancarbonsäure, Oxytetracyclin, Probenazol, Streptomycin, Tecloftalam, Kupfersulfat und andere Kupfer-Zubereitungen.

Die vorstehend aufgeführten Fungizide (Bakterizide) sind z.B. bekannt aus "The Pesticide Manual", 12. Auflage (2000) und 13. Auflage (2003), The British Crop Protection Council oder den nach den einzelnen Wirkstoffen aufgeführten Literaturstellen.

### Insektizide

Die agrochemischen Wirkstoffe können auch Insektizide / Akarizide und/oder Nematizide sein, beispielsweise
Acetylcholinesterase (AChE) Inhibitoren
   Carbamate,
   zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate
   Organophosphate,
   zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos
   (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/ -ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion
Natrium-Kanal-Modulatoren / Spannungsabhängige Natrium-Kanal-Blocker
   Pyrethroide,
   zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chiovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda- Cyhalothrin, Metofluthrin, Permethrin (cls-, trans-), Phenothrin (1 R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1 R- isomer), Tralomethrin, Transfluthrin, ZXI 8901, Pyrethrins (pyrethrum)
   DDT
   Oxadiazine,
   zum Beispiel Indoxacarb
   Semicarbazon,
   zum Beispiel Metaflumizon (BAS3201)
Acetylcholin-Rezeptor-Agonisten/-Antagonisten
   Chloronicotinyle,
   zum Beispiel Acetamiprid, Clothianidin, Dinotefuran, Imidacloprid, Nitenpyram, Nithiazine, Thiacloprid, Thiamethoxam
   Nicotine, Bensultap, Cartap
Acetylcholin-Rezeptor-Modulatoren
   Spinosyne,
   zum Beispiel Spinosad
GABA-gesteuerte Chlorid-Kanal-Antagonisten
   Organochlorine,
   zum Beispiel Camphechlor, Chlordane, Endosulfan, Gamma-HCH, HCH,
   Heptachlor, Lindane, Methoxychlor Flprole,
   zum Beispiel Acetoprole, Ethiprole, Fipronil, Pyrafluprole, Pyriprole, Vaniliprole
Chforid-Kanal-Aktivatoren
   Mectine,
   zum Beispiel Abamectin, Emamectin, Emamectin-benzoate, Ivermectin, Lepimectin, Milbemycin
Juvenilhormon-Mimetika,
   zum Beispiel Diofenolan, Epofenonane, Fenoxycarb, Hydroprene, Kinoprene, Methoprene, Pyriproxifen, Triprene
Ecdysonagonisten/disruptoren
   Diacylhydrazine,
   zum Beispiel Chromafenozide, Halofenozide, Methoxyfenozide, Tebufenozide
Inhibitoren der Chitinbiosynthese
   Benzoylharnstoffe,
   zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron Buprofezin
   Cyromazine
Inhibitoren der oxidativen Phosphoryllerung, ATP-Disruptoren
   Diafenthiuron
   Organozinnverbindungen,
   zum Beispiel Azocyclotin, Cyhexatin, Fenbutatin-oxide
Entkoppler der oxidativen Phoshorylierung durch Unterbrechung des H-Protongradienten
   Pyrrole,
   zum Beispiel Chlorfenapyr Dinitrophenole,
   zum Beispiel Binapacyrl, Dinobuton, Dinocap, DNOC
Site-I-Elektronentransportinhibitoren
   METI's,
   zum Beispiel Fenazaquin, Fenpyroximate, Pyrimidifen, Pyridaben, Tebufenpyrad, Tolfenpyrad
   Hydramethylnon
   Dicofol
Site-II-Elektronentransportinhibitoren
   Rotenone
Site-III-Elektronentransportinhibitoren
   Acequinocyl, Fluacrypyrim
Mikroblelle Disruptoren der Insektendarmmembran
   Bacillus thuringiensis-Stämme
Inhibitoren der Fettsynthese
   Tetronsäuren,
   zum Beispiel Spirodiclofen, Spiromesifen
   Tetramsäuren,
   zum Beispiel Spirotetramat
   Carboxamide,
   zum Beispiel Flonicamid
   Oktopaminerge Agonisten,
   zum Beispiel Amitraz
Inhibitoren der Magnesium-stimulierten ATPase,
   Propargite
   Nereistoxin-Analoge,
   zum Beispiel Thiocyclam hydrogen oxalate, Thiosultap-sodium
Agonisten des Ryanodin-Rezeptors,
   Benzoesäuredicarboxamide,
   zum Beispiel Flubendlamid
   Anthranilamide,
   zum Beispiel DPX E2Y45 (3-bromo-N-{4-chloro-2-methyl-6-[(methylamino)carbonyl]henyl}-1-(3-ohloropydin-2-yl)-1H-pyrazole-5-carboxamide)
Biologika, Hormone oder Pheromone
   Azadirachtin, Bacillus spec., Beauveria spec., Codlemone, Metarrhizium spec., Paecilomyces spec., Thuringiensin, Verticillium spec.
Wirkstoffe mit unbekannten oder nicht spezifischen Wirkmechanismen
   Fraßhemmer,
   zum Beispiel Cryolite, Flonicamid, Pymetrozine
   Milbenwachstumsinhibitoren,
   zum Beispiel Clofentezine, Etoxazole, Hexythiazox
   Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin.

Die vorstehend aufgeführten Insektizide (Akarizide, Nematizide) sind z.B. bekannt aus "The Pesticide Manual", 12. Auflage (2000) und 13. Auflage (2003), The British Crop Protection Council oder den nach den einzelnen Wirkstoffen aufgeführten Literaturstellen.

Eine besondere Ausführungsform der Erfindung ist die gemeinsame Applikation von Insektiziden (Akariziden, Nematiziden) als agrochemischen Wirkstoffen, entweder zusammen oder hintereinander.

Die oben genannten agrochemischen Wirkstoffe werden entsprechend über Löslichkeit in vorliegender Erfindung eingesetzt. Das Kriterium wasserlöslich bzw. öllöslich kann von jedem Wirkstoff in der Fachliteratur eingesehen werden, z.B. sind Löslichkeiten agrochemischer Wirkstoffe beispielsweise In "The Pesticide Manual", 12. Auflage (2000), 13. Auflage (2003) und 14. Auflage (2006), The British Crop Protection Council, verzeichnet.

Unter den in den erfindungsgemäßen Ölsuspensionskonzentraten als Komponente enthaltenen Sulfonylharnstoffen werden im Sinne der vorliegenden Erfindung stets sämtliche Anwendungsformen wie Säuren, Ester, Salze und Isomere wie Stereoisomere und optische Isomere verstanden. So sind neben den neutralen Verbindungen stets auch deren Salze, z.B. mit anorganischen und/oder organischen Gegenionen zu verstehen. So können Sulfonylharnstoffe z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃.

Bevorzugte Ester sind die Alkylester, insbesondere die C₁-C₁₀-Alkylester wie Methylester.

Soweit in dieser Beschreibung der Begriff Acylrest verwendet wird, bedeutet dieser den Rest einer organischen Säure, der formal durch Abspaltung einer OH-Gruppe aus der organischen Säure entsteht, z.B, der Rest einer Carbonsäure und Reste davon abgeleiteter Säuren wie der Thiocarbonsäure, gegebenenfalls N-substituierten Iminocarbonsäuren oder die Reste von Kohlensäuremonoestern, gegebenenfalls N-substituierter Carbaminsäuren, Sulfonsäuren, Sulfinsäuren, Phosphonsäuren, Phosphinsäuren.

Ein Acylrest ist bevorzugt Formyl oder Acyl aus der Gruppe CO-R^{z}, CS-R^{z}, CO-OR^{z}, CS-OR^{z}, CS-SR^{z}, SOR^{z} oder SO₂R^{z}, wobei R^{z} jeweils einen C₁-C₁₀. Kohlenwasserstoffrest wie C₁-C₁₀-Alkyl oder C₆-C₁₀-Aryl bedeutet, der unsubstituiert oder substituiert ist, z.B. durch einen oder mehrere Substituenten aus der Gruppe Halogen wie F, Cl, Br, l, Alkoxy, Haloalkoxy, Hydroxy, Amino, Nitro, Cyano oder Alkylthio, oder R^{z} bedeutet Aminocarbonyl oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl.
Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert seln kann, oder Alkyloxycarbonyl, wie (C₁-C₄) Alkyloxycarbonyl, Phenyloxycarbonyl, Benzyloxycarbonyl, Alkylsulfonyl, wie (C₁-C₄)Alkylsulfonyl, Alkylsulfinyl, wie C₁-C₄ (Alkylsulfinyl), N-Alkyl-1-iminoalkyl, wie N-(C₁-C₄)-1-imino-(C₁-C₄)alkyl und andere Reste von organischen Säuren.

Ein Kohlenwasserstoffrest bedeutet ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl. Aryl bedeutet ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl.

Ein heterocyclischer Rest oder Ring (Heterocyclyl) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S: vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B, ein heteroaromatischer Rest oder Ring (Heteroaryl) sein, wie z.B. ein mono-, bi- oder-polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Triazolyl, Dioxolanyl, Morpholinyl, Tetrahydrofuryl. Bevorzugt sind Pyrimidinyl und Triazinyl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Substituierte Reste, wie substituierte Kohlenwasserstoffreste, z.B. substituiertes Alkyl, Alkenyl, Alkinyl, Aryl, Phenyl und Benzyl, oder substituiertes Heterocyclyl oder Heteroaryl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Gegebenenfalls substituiertes Phenyl ist vorzugsweise Phenyl, das unsubstituiert oder ein- oder mehrfach, vorzugsweise bis zu dreifach durch gleiche oder verschiedene Reste, vorzugsweise aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B.o-, m- und p-Tolyl, Dimethylphenyl, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Cycloalkyl bedeutet ein carbocyclisches, gesättigtes Ringsystem vorzugsweise mit 3-6 C-Atomen, z.B. Cyclopropyl, Cyclobutyl, Cyclopentyl oder Cyclohexyl.

Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl.

Halogen bedeutet beispielsweise Fluor, Chlor, Brom oder lod. Haloalkyl, -alkenyl und -alkinyl bedeuten durch Halogen, vorzugsweise durch Fluor, Chlor und/oder Brom, insbesondere durch Fluor oder Chlor, tellweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Die erfindungsgemäßen Formulierungen enthalten neben den Komponenten a) und b) noch einen oder mehrere Hilfs- und Zusatzstoffe, z.B.:
(c) Tenside und/oder nicht-tensidische Polymere,
(d) organische Lösungsmittel,
(e) Agrochemikallen wie beispielsweise Düngemittel,
(f) übliche Formulierungshiffsmittel wie Entschäumer, Frostschutzmittel, Verdunstungshemmer, Konservierungsmittel, Riechstoffe, Farbstoffe, Stabilisatoren, Wasserfänger oder Verdicker,
(g) Tankmischkomponenten.

So können in den erfindungsgemäß Formulierungen als Komponente c) beispielsweise eines oder mehrere Tenside, z.B. ionogene, nichtionogene oder betainlsche Tenside enthalten sein. Diese können monomerer oder polymerer Natur (z.B. Graft-Polymere) sein. Beispiele für Komponenten c) sind Tenside auf Silikon-Basis wie Trisiloxantenside, Derivate von Polydimethylsiloxanen und/oder Silikonöle oder zuckerbasierte Tenside wie Atplus^{®} 309 F (Uniqema). Weitere Beispiele für Komponenten c) sind (C₄-C₃₀) (Poly) Alkylenoxidaddukte, die z.B. verzweigt, linear, gesättigt oder ungesättigt sein können, insbesondere von Fettalkoholen und/oder Fettsäuren bzw. Fettsäureestern. Beispiele für (Poly) Alkylenoxidaddukte sind Soprophor^{®} CY8 (Rhodia), Genapol^{®} X-060, Genapol^{®} X-080, Genapol^{®} X-150; Genapol® X-200, Sapogenat T^{®} 300, Sapogenat T^{®} 500, Genapol^{®} T 200, Genapol T^{®} 800, oder Genagen^{®} MEE (Methylesterethoxylate, Clariant) und andere endgruppenverschlossene Tenside mit einer Methyl-, Ethyl-, n-Propyl-, i-Propyl-, n-Butyl, tert-Butyl, i-Butyl, sec-Butyl oder Acetyl-Gruppe als Endgruppierung, z.B. Genapol^{®} X-060-Methylether oder Genapol^{®} X-150-Methylether.

Weitere Beispiele für Komponenten c) sind in der kontinuierlichen Phase der Formulierung unlösliche Komponenten, beispielsweise anionogene Tenside wie Hostapur^{®} OSB (Clariant), Netzet^{®} IS (Clariant), Galoryl^{®} DT 201 (CFPI), Tamol^{®} (BASF) oder Morwet^{®} D 425 (Witco) eingesetzt werden. Durch Einarbeitung von in der kontinuierlichen Phase unlöslichen Komponenten oder auch unlöslicher Wirkstoffe in die Formulierungen ergeben sich Dispersionen. Daher umfaßt die vorliegende Erfindung auch Dispersionen,

Als Komponente c) können auch Sulfosuccinate, z.B. der Formel (III) enthalten sein, 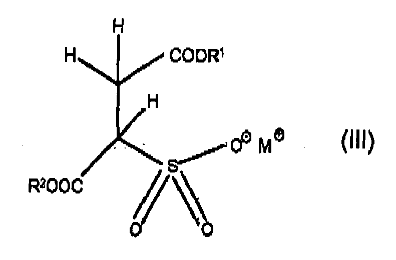 worin
- R¹,R²: unabhängig voneinander gleich oder verschieden ein unsubstituierter oder substituierter C₁-C₃₀-Kohlenwasserstoffrest wie C₁-C₃₀-Alkyl, oder ein (Poly) Alkylenoxidaddukt bedeuten und
- M^{ρ}: ein Kation ist, z.B. ein Metallkation wie ein Alkali- oder Erdalkalimetallkation, ein Ammoniumkation wie NH₄, Alkyl-, Alkylaryl- oder Poly(arylalkyl)phenyl-ammoniumkation oder deren (Poly) Alkylenoxidaddukte, oder ein aminoterminiertes (Poly) Alkylenoxidaddukt ist.

(Poly)alkylenoxidaddukte im Sinne dieser Beschreibung sind Umsetzungsprodukte von alkoxylierbaren Ausgangsmaterialien wie Alkoholen, Aminen, Carbonsäuren wie Fettsäuren, hydroxy- oder aminofunktionellen Carbonsäureestem (beispielsweise Triglyceriden auf Ricinusölbasis) oder Carbonsäureamiden mit Alkylenoxiden, wobei die (Poly)alkylenoxidaddukte mindestens eine Alkylenoxid-Einheit aufweisen, im allgemeinen aber polymer sind, d.h. 2-200, vorzugsweise 5-150 Alkylenoxid-Einheiten aufweisen. Bei den Alkylenoxid-Einheiten sind Ethylenoxid-, Propylenoxid- und Butylenoxid-Einheiten, Insbesondere Ethylenoxid-Einheiten bevorzugt. Die beschriebenen (Poly)alkylenoxidaddukte können aus gleichen oder aus verschiedenen Alkylenoxiden, beispielsweise aus blockartig oder statistisch angeordnetem Ethylenoxid und Propylenoxid aufgebaut sein, so daß die vorliegende Anmeldung auch derartige Misch-alkylenoxidaddukte umfaßt.

Außerdem können als Komponente c) auch nicht-tensidische Polymere enthalten sein, z.B. Polyvinylalkohole, Polyacrylate, Polymalinate oder Polyethylenoxide.

Die als Komponente c) enthaltenen Polymere können anorganisch (z.B. Silikate, Phosphate) oder organisch, kationisch, anionisch oder neutral, synthetisch oder natürlich vorkommend sein.

Außerdem können die erfindungsgemäßen Formulierungen als Komponente d) verschiedene organische Lösungsmittel wie unpolare Lösungsmittel, polare protische oder aprotisch dipolare Lösungsmittel und deren Mischungen enthalten. Beispiele für solche organischen Lösungsmittel d) sind
- aliphatische oder aromatische Kohlenwasserstoffe, z.B. Mineralöle, Paraffine oder Toluol, Xylole und Naphthalinderivate, insbesondere 1-Methylnaphthalin, 2-Methylnaphthalin, C₆-C₁₆-Aromatengemische wie die Solvesso^{®}-Reihe (ESSO) z.B. mit den Typen Solvesso^{®} 100 (Kp. 162-177 °C), Solvesso^{®} 150 (Kp. 187-207 °C) und Solvesso^{®} 200 (Kp. 219-282 °C) und C₆-C₂₀-Aliphaten, die linear oder cyclisch sein können, wie die Produkte der Shellsol^{®}-Reihe, Typen T und K oder BP-n Paraffine,
- halogenierte aliphatische oder aromatische Kohlenwasserstoffe wie Methylenchlorld bzw. Chlorbenzol,
- Ester wie Triacetin (Essigsäuretriglycerid), Butyrolacton, Propylencarbonat, Triethylcitrat und Phthalsäure-(C₁-C₂₂)alkylester, speziell Phthalsäure-(C₁-C₈)alkylester, Maleinsäure-(C₁-C₁₃)alkylester.
- Lineare, verzweigte, gesättigte oder ungesättigte C₁-C₂₀ Alkohole wie Methanol, Ethanol, n- und iso-Propanol, n-, iso-, sec.- und tert.-Butanol, Tetrahydrofurfurylalkohol, sowie Pentanol, Hexanol, Heptanol
- Ether wie Diethylether, Tetrahydrofuran (THF), Dioxan, Alkylenglykolmonoalkyether und -dialkylether wie z.B. Propylenglykolmonomethylether, speziell Dowanol^{®} PM (Propylenglykolmonomethylether), Propylen-glykolmonoethylether, Ethylenglykolmonomethylether oder - monoethylether, Diglyme und Tetraglyme,
- Amide wie Dimethylformamid (DMF), Dimethylacetamid, Dimethylcapryl/caprin-feftsäureamid und N-Alkylpyrrolidone,
- Ketone wie das wasserlösliche Aceton, aber auch mit Wasser nicht mischbare Ketone wie beispielsweise Cyclohexanon oder Isophoron,
- Nitrile wie Acetonitril, Propionitril, Butyronitril und Benzonitril,
- Sulfoxide und Sulfone wie Dimethylsulfoxid (DMSO) und Sulfolan, sowie
- Öle im allgemeinen, wie Mineralöle oder Öle auf pflanzlicher Basis wie Maiskeimöl, Leinsaatöl und Rapsöl.
Als Komponenten d) bevorzugte organische Lösungsmittel im Sinne der vorliegenden Erfindung sind Esteröle wie Rapsölmethylester und aliphatische oder aromatische Kohlenwasserstoffe, wie Solvesso^{®}-Typen, z. B. Solvesso^{®} 200, Solvesso® 150.

Weiterhin können Polycarbonsäurealkylester als Lösungsmittel wirken und sind z. B. Alkylester niedermolekularer dl-, tri-, tetra- oder auch höherfunktioneller Carbonsäuren, vorzugsweise mit 2-20 C-Atomen in Frage. Ebenso kommen polymere Polycarbonsäuren, vorzugsweise mit Molekulargewichten bis 2000 g/mol in Frage. Beispiele für Polycarbonsäuren sind Oxal-, Malon-, Bernstein-, Glutar-, Adipin-, Pimelln-, Sebacin-, Azelain-, Suberin-, Malein-, Phthal-, Terephthal-, Mellit-, Trimellit-, Polymalein-, Polyacryl- und Polymethacrylsäure sowie Co- bzw. Terpolymere, die Malein-, Acryl- und/oder Methacrylsäureeinheiten enthalten.

Als Alkoholkomponente der Polycarbonsäurealkylester kommen z.B. Alkylalkohole, vorzugsweise monofunktionelle Alkylalkohole mit 1- 20 C-Atomen in Frage. Beispiele solcher Alkylalkohole sind Methyl-, Ethyl-, n-Propyl-, iso-Propyl-, n-Butyl-, sec.-Butyl-, iso-Butyl- oder tert-Butylalkohol.

Die Polycarbonsäurealkylester weisen vorzugsweise die nachfolgende Formel (I) auf,

R-O-OC-(CR^{α}R^{β})ₓ-CO-O-R^{δ} (I)

worin
- R^{α}: und R^{β} gleich oder verschieden H, ein unsubstituierter oder substituierter C₁-C₂₀-Kohlenwasserstoffrest wie C₁-C₁₀-Alkyl oder eine Gruppe (CR'R")_{y}-CO-OR"' sind, worin R' und R" gleich oder verschieden H oder ein unsubstituierter oder substituierter C₁-C₂₀-Kohlenwasserstoffrest wie C₁-C₁₀-Alkyl sind, y eine ganze Zahl von 0 bis 10 ist und R"' ein unsubstituierter oder substituierter C₁₋C₂₀-Kohlenwasserstoffrest wie C₁-C₁₀ Alkyl ist,
- R^{γ} und R^{δ}: gleich oder verschieden ein unsubstituierter oder substituierter C₁-C₂₀-Kohlenwasserstoffrest wie C₁-C₁₀ Alkyl ist, und x eine ganze Zahl von 0 bis 20 ist.

Besonders bevorzugte Polycarbonsäurealkylester sind Diester der nachstehenden Formel (Ia)

R^{y}-O-OC-(CH₂)ₓ-CO-O-R^{δ} (Ia)

worin
x eine ganze Zahl von 0 bis 20 ist, und
R^{γ} und R^{δ} unabhängig voneinander gleich oder verschieden C₁-C₆-Alkyl sind.

Beispiele für Polycarbonsäurealkylester sind Oxalsäureester wie Oxalsäuredimethylester, Oxalsäure-diethylester, Oxalsäure-di-n-propylester, Oxatsäure-di-isopropylester und Oxalsäure-methylethylester. Malonsäureester wie Malonsäuredimethylester, Malonsäure-diethylester, Malonsäure-di-n-propylester, Malonsäure-di-isopropylester und Malonsäure-methylethylester, Bemsteinsäureester wie Bernsteinsäure-dimethylester, Bernsteinsäure-diethylester, Bernsteinsäure-di-n-propylester, Bernsteinsäure-di-isopropylester und Bernsteinsäure-methylethylester, Glutarsäureester wie Glutarsäure-dimethylester, Glutarsäure-diethylester, Glutarsäure-di-n-propylester, Glutarsäure-di-isopropylester und Glutarsäuremethylethylester, und Adipinsäureester wie Adipinsäure-dimethylester, Adipinsäurediethylester, Adipinsäure-di-n-propylester, Adipinsäure-di-isopropylester und Adipinsäure-methylethylester. Bevorzugt sind Adipinsäureester, insbesondere Adipinsäure-dimethylester.

Die Polycarbonsäurealkylester sind beispielsweise durch Umsetzung der freien Carbonsäuren mit den Alkoholen zugänglich, wobei die Ester z.B. durch Umsetzung "aktivierter" Polycarbonsäuren wie Polycarbonsäure-Anhydriden oder Polycarbonsäure(poly)chloriden mit den Alkoholen nach bekannten Veresterungsmethoden erhalten werden können.

Die erfindungsgemäßen Flüssigformulierungen, können als Komponente e) verschiedene Agrochemikalien enthalten. Dies sind beispielsweise Wachstumsregulatoren oder Düngemittel.

In den erfindungsgemäßen flüssigen Formulierungen können als Komponente f) auch übliche Formulierungshilfsmittel wie Entschäumer, Frostschutzmittel, Verdunstungshemmer, Konservierungsmittel, Riechstoffe, Farbstoffe, Stabilisatoren, Wasserfänger oder Verdicker enthalten sein. Bevorzugte Formulierungshilfsmittel sind Frostschutzmittel und Verdunstungshemmer wie Glycerin, z.B. in einer Menge von 2 bis 10 Gew.-% und Konservierungsstoffe, z.B. Mergal^{®} K9N (Riedel) oder Cobate^{®} C.

Es können in den erfindungsgemäßen Formulierungen als Komponente g) auch Tankmisch-Komponenten enthalten sein. Beispiele hierfür sind Tankmlsch-Adjuvantien wie Telmion^{®} (Hoechst) oder Pflanzenöle wie Actirob B^{®} (Novance) oder Hasten^{®} (Victorian Chemicals), anorganische Verbindungen wie Düngemittel, z. B. Ammoniumsulfat, Ammoniumnitrat, Ammoniumhydrogensulfat, Harnstoffe oder Hydrotropika.

Der Wirkstoffgehalt der erfindungsgemäßen Formulierungen kann im allgemeinen zwischen 0,001 Gewichtsprozent und 80 Gewichtsprozent betragen, wobei im Einzelfall, insbesondere bei Verwendung mehrerer Wirkstoffe, auch höhere Beladungen möglich sind.

Die zur Herstellung der erfindungsgemäßen Formulierungen verwendbaren Hilfs- und Zusatzstoffe wie z.B. Tenside und Lösungsmittel sind im Prinzip bekannt und werden beispielsweise beschrieben in: McCutcheon's "Detergents and Emulsifiers Annual", MC Publ. Corp., Ridgewood N.J.; Sisley and Wood, "Encyclopedia of Surface active Agents", Chem, Publ.Co.Inc., N.Y. 1964; Schönfeldt, "Grenzflächenaktive Äthylenoxidaddukte", Wiss. Verlagsgesellschaft, Stuttgart 1976; Winnacker-Küchler, "Chemische-Technologie", Band 7, C.Hanser-Verlag, München, 4. Auflage 1986.

Die vorliegende Erfindung umfaßt somit auch die zur Herstellung der erfindungsgemäßen Formulierungen beschriebenen Verfahren.

Die erfindungsgemäßen Formulierungen stellen physikalisch und chemisch stabile Formulierungen dar, welche bei Verdünnung mit Wasser Spritzbrühen mit physikalisch-anwendungstechnisch günstigen Eigenschaften ergeben. Darüber hinaus weisen die erfindungsgemäßen Formulierungen günstige biologische Eigenschaften auf und sind breit einsetzbar, z. B. zur Bekämpfung von unerwünschtem Pflanzenwuchs.

Die Herstellung der Mikrokapseln kann analog bekannten Verfahren hergestellt werden. Die Herstellung der verkapselten wässrigen Lösungen oder Suspensionen werden bevorzugt ausgehend von einer Wasser-in-Öl-Emulsion unter Zusatz von polymerisierbaren Komponenten, gegebenenfalls in Gegenwart von geeigneten tensidischen Komponenten, hergestellt, siehe beispielsweise US 4,157,983 und US 4,534,783.

Die erfindungsgemäßen Formulierungen lassen sich beispielsweise wie folgt herstellen (Ausführungsbeispiel):

Eine organische Phase wurde vorbereitet durch das Auflösen von Dodecylbenzolsulfonsäure und nicht-ionischem Alkylarylphenol in Kerosin als Lösungsmittel. Die wässrige Phase wurde vorbereitet durch Auflösen von Glyphosat und Harnstoff/Formaldehydpräpolymeren in Wasser. Die beiden Phasen wurden dann vereinigt und bildeten unter Rühren eine Wasser-in-Ölemulsion. Danach wurde die Temperatur auf 40°C erhöht und das Rühren für 2 oder mehr Stunden fortgesetzt. Das resultierende Produkt wurde gekühlt, um eine Suspension von Mikrokapseln in der organischen Phase zu ergeben, wobei die Mikrokapseln das wässrige Medium umschließen.

Die Herstellung von Mikrokapseln welche in der Ölphase gelöste oder dispergierte agrochemische Wirkstoffe umschließen kann analog nach den bekannten Methoden erfolgen,

Abschließend werden die wassergelösten und mikroverkapselten agrochemischen Wirkstoffe mit den in der Ölphase gelösten oder dispergierten agrochemischen Wirkstoffen gemischt, um das erfindungsgemäße Ölsuspensionskonzentrat zu ergeben.

Im Rahmen der Erfindung ist auch die Herstellung der erfindungsgemäßen Ölsuspensionskonzentrate vorgesehen. Diese können durch bekannte Verfahren hergestellt werden. Das Vermahlen und Vermischen der Komponenten erfolgt soweit dies mit der Bildung bzw. Anwesenheit der Mikrokapseln verträglich ist nach den bekannten Methoden.

Zur Anwendung können die erfindungsgemäßen Ölsuspensionskonzentrate gegebenenfalls in üblicher Weise verdünnt werden (z.B. mittels Wasser), z.B. zu Suspensionen, Emulsionen, Suspoemulsionen oder Lösungen, vorzugsweise zu Emulsionen. Es kann vorteilhaft sein, erhaltenen Spritzbrühen weitere agrochemische Wirkstoffe (z.B. Tänkmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche herbiziden Mittel, auf Basis der erfindungsgemäßen Ölsuspensionskonzentrate.

Die erfindungsgemäßen Ölsuspensionskonzentrate und die daraus durch Verdünnen erhältlichen Anwendungsformen (zusammen "erfindungsgemäße herbizide Mittel") weisen eine ausgezeichnete herbizide Wirksamkeit gegen ein breites Spektrum wirtschaftlich wichtiger mono- und dikotyler Schadpflanzen auf, einschließlich Arten die resistent sind gegen herbizide Wirkstoffe wie Glyphosate, Glufosinate, Atrazin oder Imidazolinon-Herbizide. Auch schwer bekämpfbare perennierende Unkräuter, die aus Rhizomen, Wurzelstöcken oder anderen Dauerorganen austreiben, werden durch die Wirkstoffe gut erfaßt. Dabei kann die Applikation im Vorsaat-, Vorauflauf- oder Nachauflaufverfahren erfolgen. Bevorzugt erfolgt die Applikation dabei auf die aufgelaufenen Schadpflanzen (z.B. Unkräuter oder unerwünschte Kulturpflanzen), insbesondere vor dem Auflaufen der (erwünschten) Kulturpflanzen. Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll.

Auf der Seite der monokotylen Unkrautarten werden z.B. Avena spp., Alopecurus spp., Brachiaria spp., Digitaria spp., Lolium spp., Echinochloa spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp,, Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird. Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die verwendeten und wirksamen Dosierungen von Verbindungen (a) so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Darüberhinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z,B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten Pflanzenkulturen oder noch zu entwickelnden toleranten oder gentechnisch veränderten Kulturpflanzen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B, das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt,

Die Aufwandmenge der Herbizide, z.B. im Fall der Pyridyl-Sulfonylharnstoffe, kann in einem weiten Bereich variieren, beispielsweise zwischen 0,001 g und 500 g AS/ha (AS/ha bedeutet dabei im Folgenden "Aktivsubstanz pro Hektar" = bezogen auf 100%igen Wirkstoff). Bei Anwendungen mit Aufwandmengen von 0,01 g bis 200 g AS/ha der Herbizide, wird im Vor- und Nachauflaufverfahren ein relativ breites Spektrum an Schadpflanzen bekämpft, z.B. an annuellen und perennierenden mono- oder dikotylen Unkräutern sowie an unerwünschten Kulturpflanzen. Bei den erfindungsgemäßen Kombinationen liegen die Aufwandmengen in der Regel niedriger, z. B. im Bereich von 0,001 g bis 100 g AS/ha, vorzugsweise 0,005 g bis 50 g AS/ha, besonders bevorzugt 0,01 g bis 9 g AS/ha.

Die Sulfonylharnstoff enthaltenden Ölsuspensionskonzentrate, sind z.B. zur Bekämpfung von Schadpflanzen in Pflanzenkulturen geeignet, beispielsweise in wirtschaftlich bedeutenden Ackerbaukulturen z.B, monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.6, RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kern- und Steinobst, Beerenobst, Wein, Hevea, Bananen, Zuckerrohr, Kaffee, Tee, Citrus, Nussplantagen, Rosen, Palmenkulturen und Forstkulturen. Für die Anwendung von Herbizid-Kombinationen sind diese Kulturen ebenfalls bevorzugt. Für die Herbizid-Kombinationen sind vor allem gegenüber den Herbiziden tolerante Mutantenkulturen und tolerante transgene Kulturen von besonderem Interesse, vorzugsweise Mais, Reis, Getreide, Raps und Soja, insbesondere Soja, die gegen Imidazolinon-Herbizide, Glufosinate oder Glyphosate resistent sind.

Die Ölsuspensionskonzentrate können auch nicht-selektiv zur Bekämpfung unerwünschten Pflanzenwuchses eingesetzt werden, z.B. in Dauer- und Plantagenkulturen, an Wegrändern, Plätzen, Industrieanlagen, Flugplätzen oder Eisenbahnanlagen, oder zur sogenannten Burn-Down-Anwendung, z.B. in Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. (Soja) wie nicht-transgene Glycine max. (z.B. konventionelle Sorten wie STS-Sorten) oder transgene Glycine max, (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel.

Die Erfindung wird durch das Beispiel näher erläutert, ohne sie dadurch einzuschränken.

### Beispiel:

Tabelle 1 zeigt die Zusammensetzung eines erfindungsgemäßen Ölsuspensionskonzentrates

**Tabelle 1**

| Komponente | Bezeichnung: Agrochemischer Wirkstoff | Gewichtsprozent [Gew.-%] |
|---|---|---|
| (a) | Glyphosate-isopropylammoniumsalz (verkapselt) | 18 |
| (b) | Flufenacet (gelöst) | 7,2 |
| (b) | lodosulfuron-methyl-Natrium (dispergiert) | 0,1 |
| (b) | Mefenpyr-diethyl (gelöst) | 0,3 |
| (c) - (g) | Hilfs- und Zusatzstoffe | 74,4 |

## Patentansprüche

1. Ölsuspensionskonzentrat, enthaltend
(a) ein oder mehrere agrochemische Wirkstoffe in der Wasser-Phase, in verkapselter Form in der Öl-Phase vorliegend, und
(b) ein oder mehrere agrochemische Wirkstoffe in der Öl-Phase, optional verkapselt,
sowie Übliche Hilfs- und Zusatzstoffe.

2. Ölsuspensionskonzentrat gemäß Anspruch 1, worin der in der Ölphase in gekapselter oder nicht gekapselter Form dispergiert oder gelöst vorliegende Wirkstoff ein Sulfonylharnstoff, insbesondere ein Phenylsulfonylharnstoff, Heteroarylsulfonharnstoff, ein (Het)Aryl-sulfonylaminocarbonyltriazolinon, oder ein Pyridyl-sulfonylharnstoff ist.

3. Ölsuspensionskonzentrat gemäß Anspruch 1, worin der in der Ölphase in gekapselter oder nicht gekapselter Form dispergiert oder gelöst vorliegende Wirkstoff ein Thien-3-yl-sulfonylamin(thio)carbonyltriazolin(thi)on und/oder dessen Salz ist.

4. Ölsuspensionskonzentrat gemäß Anspruch 1, worin der in der Ölphase in gekapselter oder nicht gekapselter Form dispergiert oder gelöst vorliegende Wirkstoff ein Phenylsulfonylharnstoff.

5. Ölsuspensionskonzentrat gemäß Anspruch 1, worin der in der Ölphase in gekapselter oder nicht gekapselter Form dispergiert oder gelöst vorliegende Wirkstoff ein Dioxazin-Pyridyisulfonylharnstoff und/oder dessen Salz ist.

6. Ölsuspensionskonzentrat gemäß Anspruch 1, worin der in der Ölphase in gekapselter oder nicht gekapselter Form dispergiert oder gelöst vorliegende Wirkstoff ein Phenylsulfonylaminocarbonyltriazolinon, insbesondere ein Propoxycarbazon und/oder dessen Salz ist.

7. Ölsuspensionskonzentrat enthaltend mindestens zwei unterschiedliche agrochemische Wirkstoffe, von denen mindestens einer im Inneren einer Mikrokapsel vorliegt und mindestens einer in nicht gekapselter Form in der Ölphase vorliegt, **dadurch gekennzeichnet, dass** der in nicht gekapselter Form in der Ölphase vorliegende Wirkstoff ein phosphorhaltiges Herbizid ist.

8. Ölsuspensionskonzentrat enthaltend mindestens zwei unterschiedliche agrochemische Wirkstoffe, worin mindestens ein Wirkstoff wasserlöslich ist und mindestens ein in der Ölphase dispergiert oder gelöst vorliegender Wirkstoff ist und die Wirkstoffe gemäß einem Multi-Mikroverkapselungsverfahren behandelt wurden und in entsprechender Form vorliegen.

9. Ölsuspensionskonzentrat gemäß einem der vorliegenden Ansprüche, wobei sich die Mikrokapseln, welche die in der Ölphase dispergiert oder gelöst vorliegenden Wirkstoffe enthalten, in ihren Freisetzungseigenschaften von den Mikrokapseln, welche die wasserlöslichen Wirkstoffe enthalten, unterscheiden.

10. Ölsuspensionskonzentrat gemäß einem der vorhergehenden Ansprüche, wobei sich die in der Ölphase vorliegenden Wirkstoffe in ihren chemischen Eigenschaften, insbesondere in ihrer Hydrolyseempfindlichkeit, von den wasserlöslichen Wirkstoffen unterscheiden.

11. Ölsuspensionskonzentrat gemäß einem der vorhergehenden Ansprüche, wobei sich in der Ölphase vorliegenden Wirkstoffe in ihrem Schmelzpunkt, von den wasserlöslichen Wirkstoffen unterscheiden.

12. Ölsuspensionskonzentrat gemäß einem der vorhergehenden Ansprüche, wobei die in gekapselter Form vorliegenden Wirkstoffe einen Schmelzpunkt > 120 °C aufweisen.

13. Verfahren zur Bekämpfung von Schadorganismen, wobei eine wirksame Menge eines Ölsuspensionskonzentrats nach einem oder mehreren der Ansprüche 1 bis 14, auf die Schadorganismen oder die Orte an denen sie auftreten, appliziert wird.

14. Verwendung eines Ölsuspensionskonzentrats nach einem oder mehreren der Ansprüche 1 bis 13 zur Verhinderung der zur Verzögerung des chemischen Abbaus, insbesondere der Hydrolyse von Wirkstoffen in agrochemischer Formulierungen.

15. Verfahren zur Bekämpfung von Schadpflanzen, wobei eine wirksame Menge eines Ölsuspensionskonzentrats nach einem oder mehreren der Ansprüche 1 bis 13, auf die Schadpflanzen, Teile der Pflanzen, Pflanzensamen oder die Flächen an denen die Pflanzen wachsen appliziert wird,

16. Verwendung eines Ölsuspensionskonzentrats nach einem oder mehreren der Anspruche 1 bis 13, zur Bekämpfung von Schadorganismen.

17. Verwendung eines Ölsuspensionskonzentrats nach einem oder mehreren der Ansprüche 1 bis 13, zur Bekämpfung von Schadpflanzen.

18. Verwendung eines Ölsuspensionskonzentrats nach einem oder mehreren der Ansprüche 1 bis 14, zur Herstellung von Wirkstoff-Formulierungen.
